# EUROPÄISCHE PATENTSCHRIFT

(11) **EP 3 402 035 B1**
(45) Veröffentlichungstag und Bekanntmachung des Hinweises auf die Patenterteilung: **29.07.2020**
(21) Anmeldenummer: 18170916.3
(22) Anmeldetag: 04.05.2018
(51) Int. Cl.: B60L 53/14, B60L 53/60, B60L 53/53, B60L 53/10, B60L 53/66, B60L 53/67, H02J 7/00, B60L 53/30

(54) **VERFAHREN ZUM AUFLADEN EINER BATTERIE SOWIE STATIONÄRE LADEEINRICHTUNG**
METHOD FOR CHARGING A BATTERY AND STATIONARY LOADING INSTALLATION
PROCÉDÉ DE CHARGEMENT D'UNE BATTERIE AINSI QUE DISPOSITIF DE CHARGEMENT STATIONNAIRE

(30) Priorität: 10.05.2017 DE 102017110148
(43) Veröffentlichungstag der Anmeldung: 14.11.2018
(73) Patentinhaber: Vector Informatik GmbH, 70499 Stuttgart (DE)
(72) Erfinder: Großmann, Dirk Alexander, 70825 Korntal (DE); Kowatsch, Benjamin, 70806 Kornwestheim (DE)
(74) Vertreter: Patentanwälte Bregenzer und Reule Partnerschaftsgesellschaft mbB

(56) Entgegenhaltungen:
- EP-A1- 2 751 902
- DE-A1-102015 205 015
- JP-A- H08 116 626
- US-A1- 2017 050 527
- US-B1- 9 511 677

## Beschreibung

Die Erfindung betrifft ein Verfahren zum Aufladen einer Batterie, insbesondere einer Fahrzeugbatterie, mit elektrischem Strom an einer mindestens einen Ladeanschluss für die Batterie aufweisenden stationären Ladeeinrichtung, wobei die Ladeeinrichtung und eine Batterie-Ladesteuerungseinrichtung, die bei der Batterie angeordnet ist und mit der Batterie ein System bildet, über eine Kommunikationsverbindung miteinander verbunden sind, bei dem vorgesehen ist:
- Senden einer Anforderungsnachricht mit einer elektrischen Ladebedarfsangabe und einer Ladezeitangabe durch die Batterie-Ladesteuerungseinrichtung an die stationäre Ladeeinrichtung, wobei die Ladebedarfsangabe einen zum Aufladen der Batterie erforderlichen elektrischen Ladebedarf, insbesondere eine Anforderung-Energiemenge und/oder eine zum Aufladen der Batterie benötigte elektrische Leistung, und die Ladezeitangabe eine zum Aufladen der Batterie zur Verfügung stehende Zeit angeben und
- Senden eines Ladeplans durch die stationäre Ladeeinrichtung an die Batterie-Ladesteuerungseinrichtung, wobei der Ladeplan einen Verlauf maximal zum Aufladen der Batterie bereitstellbarer elektrischer Leistung während eines innerhalb der Ladezeitangabe liegenden Ladezeitraums enthält.

Ein derartiges Verfahren ist beispielsweise in DE 10 2015 205 015 A1 beschrieben.

Zum Aufladen von Batterien eines Kraftfahrzeugs werden diese regelmäßig mit stationären Ladeeinrichtungen, beispielsweise sogenannten Ladesäulen, verbunden. Der eigentliche Ladevorgang wird seitens des Fahrzeugs durch eine Batterie-Ladesteuerungseinrichtung gesteuert und überwacht, so dass die Batterie in idealer Weise aufgeladen werden kann. Zwischen der stationären Ladeeinrichtung und der Batterie-Ladesteuerungseinrichtung erfolgt regelmäßig eine Kommunikation, beispielsweise nach dem Standard ISO-IEC-15118. Die Batterie-Ladesteuerungseinrichtung und die stationäre Ladeeinrichtung handeln sozusagen einen Ladeplan aus, an den sich zumindest die stationäre Ladeeinrichtung halten muss. Die mobile Einrichtung, nämlich die Batterie-Ladesteuerungseinrichtung, sendet eine Anforderungsnachricht für den Ladeplan. In dieser Anforderungsnachricht ist angegeben, welcher elektrischer Ladebedarf besteht, beispielsweise welche elektrische Leistung zu einem Aufladen der Batterie notwendig ist oder welche Energiemenge notwendig ist, also welche Anforderung-Energiemenge benötigt ist, um die Batterie bis zu einem vorbestimmten Ladezustand aufzuladen. Der Ladezustand kann beispielsweise durch einen Bediener oder Nutzer der Batterie vorgegeben sein. Der Ladezustand kann beispielsweise die vollständige Aufladung der Batterie definieren. Mithin erhält also die stationäre Ladeeinrichtung anhand der Anforderungsnachricht eine Information darüber, wie eine gewünschte Aufladung der Batterie aussehen soll.

Daraufhin stellt die stationäre Ladeeinrichtung einen Ladeplan zur Verfügung, in welchem der Verlauf maximal zum Aufladen der Batterie bereitstellbarer elektrischer Leistung während eines innerhalb eines der Ladezeitangabe liegenden Ladezeitraumes angegeben ist, um den Ladebedarf möglichst optimal zu befriedigen, welchen die Batterie-Ladesteuerungseinrichtung sozusagen angemeldet hat.

Dabei treten Situationen auf, dass die Ladekapazität der stationären Ladeeinrichtung erschöpft ist, wenn weitere Batterien aufzuladen sind. Die stationäre Ladeeinrichtung hat nämlich beispielsweise der bereits an sie angeschlossenen Batterie-Ladesteuerungseinrichtung oder mehreren, gleichzeitig an sie angeschlossene Batterie-Ladesteuerungseinrichtungen Ladepläne angeboten, die die Ladekapazität der stationären Ladeeinrichtung sozusagen ausschöpfen. Wenn weitere Batterien aufzuladen sind, ist das nicht möglich. Dementsprechend können Engpässe auftreten, dass an sich zwar die Ladeeinrichtung der an sich bereitstehenden oder bereitstellbaren Energie in der Lage wäre, mehrere oder weitere Batterien aufzuladen, aber aufgrund der bereits abgegebenen "Verpflichtungen", nämlich der bereits angebotenen Ladepläne, keine weiteren Batterien mehr aufladen kann.

Es ist daher die Aufgabe der vorliegenden Erfindung, ein verbessertes Ladeverfahren sowie eine zugeordnete verbesserte stationäre Ladeeinrichtung bereit zu stellen.

Zur Lösung der Aufgabe ist ein Verfahren gemäß der technischen Lehre des Anspruchs 1 vorgesehen.

Gemäß einem weiteren Aspekt der Erfindung ist ein Computerprogramm oder Computerprogrammprodukt für eine stationäre Ladeeinrichtung vorgesehen, welche einen Prozessor aufweist. Das Computerprogrammprodukt enthält Programmcode, der durch den Prozessor der stationären Ladeeinrichtung ausführbar ist, so dass die stationäre Ladeeinrichtung und deren Prozessor bei Ausführung des Programmcodes die Schritte des Verfahrens gemäß obiger Beschreibung, die der stationären Ladeeinrichtung zugeordnet sind oder von der stationären Ladeeinrichtung auszuführen sind, ausführen.

Ein derartiger Prozessor kann beispielsweise die nachfolgend erläuterten Berechnungsmittel oder Kommunikationsmittel einer ebenso erfindungsgemäß vorgesehenen stationären Ladeeinrichtung darstellen oder zumindest teilweise bilden. Die Ladeeinrichtung führt nämlich die ihr zugeordneten Schritte des Verfahrens gemäß obiger Definition durch, um mit der Batterie-Ladesteuerungseinrichtung über die Kommunikationsmittelverbindung zu kommunizieren und anhand von Berechnungsmitteln den mindestens einen Ladeplan zu berechnen.

An dieser Stelle sei erwähnt, dass selbstverständlich die stationäre Ladeeinrichtung nicht nur einen, sondern auch mehrere, also mindestens zwei, alternative Ladepläne gemäß der Erfindung berechnen und der Batterieladesteuerungseinrichtung anbieten kann.

Die stationäre Ladeeinrichtung übermittelt der Batterie-Ladesteuerungseinrichtung den Ladeplan als Information, bevor der eigentliche Ladevorgang beginnt. Der Ladeplan wird also vordem eigentlichen Ladevorgang kommuniziert. Die stationäre Ladeeinrichtung sendet also beispielsweise eine Ladeplan-Nachricht, die den mindestens einen Ladeplan enthält.

Es ist ein Grundgedanke der vorliegenden Erfindung, dass die stationäre Ladeeinrichtung in dem ersten Ladezeitabschnitt des Ladezeitraums möglichst viel elektrische Leistung anbietet, welche vorzugsweise von der mobilen Ladesteuerungseinrichtung auch genutzt wird, während in einem zweiten Ladezeitabschnitt möglichst wenig elektrische Leistung angeboten wird, so dass in diesem zweiten Ladezeitabschnitt weitere Verbraucher bzw. Batterien mit elektrischer Energie bzw. elektrischer Leistung versorgt werden können. Die maximale elektrische Leistung ist also in dem ersten Ladezeitabschnitt größer, nämlich um einen Faktor vorzugsweise deutlich größer, als die zweite maximale elektrische Leistung, welche dem zweiten Ladezeitabschnitt zugeordnet ist.

Der Ladeplan entspricht vorteilhaft einer verbindlichen Zusage der stationären Ladeeinrichtung, zum Aufladen der Batterie vorgesehene elektrische Leistung innerhalb des Ladezeitraums in dem im Ladeplan angegebenen Verlauf bereit zu stellen. Die stationäre Ladeeinrichtung hat also die elektrische Leistung entsprechend dem Ladeplan bereit zu stellen. Dabei ist es möglich, dass die Batterie-Ladesteuerungseinrichtung die Aufladung der Batterie derart steuert, dass sie die elektrische Leistung, die im Ladeplan angegeben ist, vollständig, nur teilweise oder gar nicht abruft.

Bevorzugt ist vorgesehen, dass der Ladeplan eine verbindliche Angabe der stationären Ladeeinrichtung über die durch die stationäre Ladeeinrichtung minimal zum Aufladen der Batterie bereitstellbaren elektrischen Leistung innerhalb des Ladezeitraums entspricht.

Bevorzugt ist vorgesehen, dass die Batterie-Ladesteuerungseinrichtung eine Akzeptanznachricht an die stationäre Ladeeinrichtung sendet, mit der sie den Ladeplan akzeptiert. In der Akzeptanznachricht kann angegeben sein, welcher Ladeplan akzeptiert wird. Wenn also beispielsweise die stationäre Ladeeinrichtung zwei oder weitere Ladepläne anbietet, kann die Batterie-Ladesteuerungseinrichtung den von ihr ausgewählten oder akzeptierten Ladeplan in der Akzeptanznachricht angeben.

Es ist möglich, dass der Ladeplan erst dann für die stationäre Ladeeinrichtung verbindlich ist, wenn die Batterie-Ladesteuerungseinrichtung den Ladeplan akzeptiert hat.

Es ist aber auch möglich, dass die stationäre Ladeeinrichtung sich an die Batterie-Ladesteuerungseinrichtung gesendeten Ladeplan auch ohne Akzeptanznachricht halten muss, d.h. die Batterie-Ladesteuerungseinrichtung die in dem Ladeplan angegebene elektrische Leistung entsprechend dem ebenfalls im Ladeplan angegebenen Verlauf bereitstellen muss, auch wenn keine Akzeptanznachricht übermittelt wird.

Anstelle der Akzeptanznachricht kann beispielsweise der Beginn des Ladevorgangs stehen, d. h. dass die Batterie-Ladesteuerungseinrichtung den Ladeplan beispielsweise dadurch akzeptiert, dass sie mit dem Ladevorgang beginnt und/oder elektrische Leistung bei der stationären Ladeeinrichtung abruft.

Eine Variante der Erfindung kann zum Beispiel vorsehen, dass der Ladeplan durch die Batterie-Ladesteuerungseinrichtung als akzeptiert gilt, wenn die Batterie-Ladesteuerungseinrichtung nicht innerhalb einer vorbestimmten oder einstellbaren Zeit den Ladeplan ablehnt. Wenn also die stationäre Ladeeinrichtung nicht innerhalb einer vorbestimmten oder einstellbaren Zeit, zum Beispiel innerhalb von 30 Sekunden, 1 Minute oder dergleichen, keine Nachricht von der Batterie-Ladesteuerungseinrichtung erhält, gilt der zuletzt gesendete Ladeplan als akzeptiert. Dann stellt die stationäre Ladeeinrichtung elektrische Energie entsprechend dem Ladeplan für die Batterie-Ladesteuerungseinrichtung bereit.

Weiterhin ist möglich, dass der Ladeplan durch die Batterie-Ladesteuerungseinrichtung innerhalb einer vorbestimmten oder einstellbaren Zeit akzeptiert werden muss, beispielsweise anhand der bereits erläuterten Akzeptanznachricht, so dass er für die stationäre Ladeeinrichtung verbindlich wird oder ist. Wenn die Batterie-Ladesteuerungseinrichtung nicht innerhalb einer vorbestimmten oder einstellbaren Zeit eine Akzeptanznachricht an die stationäre Ladeeinrichtung sendet, dass ein Ladeplan akzeptiert ist, muss sich die stationäre Ladeeinrichtung an diesen vorgeschlagenen Ladeplan nicht mehr halten. Die stationäre Ladeeinrichtung kann dann für eine andere Batterie-Ladesteuerungseinrichtung oder aufzuladende Batterie elektrische Energie bereitstellen, die ansonsten für den nicht akzeptierten Ladeplan reserviert wäre. Es ist möglich, dass die stationäre Ladeeinrichtung einen Ladeplan mit einer Zeitangabe versendet, innerhalb welcher Zeit der jeweilige Ladeplan durch die Batterie-Ladesteuerungseinrichtung akzeptiert werden muss. Wenn innerhalb dieser Zeit die Akzeptanznachricht nicht bei der stationären Ladeeinrichtung eintrifft, gilt der Ladeplan als nicht akzeptiert.

Die Kommunikation der stationären Ladeeinrichtung und der Batterie-Ladesteuerungseinrichtung erfolgt vorzugsweise nach einem Kommunikationsstandard, insbesondere ISO-IEC-15118 oder DINSpec70121 oder SAE J2847. Die Nachrichten und Nachrichtenstrukturen der zwischen der Ladeeinrichtung und der Batterie-Ladesteuerungseinrichtung kommunizierten Nachrichten sind vorzugsweise in derartigen Standards grundsätzlich festgelegt.

Die Unterteilung in einen ersten und mindestens einen zweiten Ladezeitabschnitt soll nur exemplarisch verstanden werden. Selbstverständlich können auf den ersten Ladezeitabschnitt mehrere zweite, dritte und vierte Ladezeitabschnitte folgen. Dabei ist sozusagen der Spielraum, den die stationäre Ladeeinrichtung während des zweiten Ladezeitabschnittes hat, aufgrund der bereits abgeschlossenen oder erfolgten Aufladung der Batterie während des ersten Ladezeitabschnitt größer, um weitere Batterien aufzuladen, als dies ansonsten der Fall wäre.

Nun kann ein Szenario vorsehen, dass die in dem Ladezeitraum durch den Ladeplan angebotene Bereitstellung-Energiemenge kleiner als die von der Ladesteuerungseinrichtung angeforderte Anforderung-Energiemenge ist. Mithin ist also die stationäre Ladeeinrichtung nach den ihr bekannten Kriterien, beispielsweise der von einem übergeordneten Netz bereitgestellten Energie, nicht in der Lage, den vollständigen Umfang der Anforderung-Energiemenge bereit zu stellen. Mithin kann also die Batterie in diesem Szenario nicht oder nur teilweise aufgeladen werden. Dennoch sieht die Erfindung auch in diesem Fall vor, dass in dem ersten Ladezeitabschnitt die erste maximale elektrische Leistung um einen Faktor größer als die zweite maximale elektrische Leistung ist, die Batterie also möglichst optimal bereits im ersten Ladezeitabschnitt aufgeladen wird, damit in dem nachfolgenden mindestens einen zweiten Ladezeitabschnitt Ladekapazität für gegebenenfalls andere aufzuladende Batterien bereitsteht.

Bevorzugt ist jedoch, wenn die von der stationären Ladeeinrichtung in dem Ladezeitraum durch den Ladeplan angebotene Bereitstellung-Energiemenge größer oder gleich der Anforderung-Energiemenge ist. Mithin ist es also möglich, mit dem angebotenen Ladeplan die Batterie im angeforderten Umfang aufzuladen.

Vorzugsweise ist vorgesehen, dass das Verfahren auch eine maximale elektrische Anschlussleistung der Ladeeinrichtung berücksichtigt. Die erste maximale elektrische Leistung wird beispielsweise von der stationären Ladeeinrichtung derart ermittelt, dass sie einer maximalen Anschlussleistung der Ladeeinrichtung entspricht oder die maximale Anschlussleistung der Ladeeinrichtung maximal ausnutzt. Vorzugsweise ist vorgesehen, dass die maximale Anschlussleistung der Ladeeinrichtung nicht überschritten wird, wenn die erste maximale elektrische Leistung berechnet oder bereitgestellt oder angeboten wird.

Bevorzugt ist es, wenn die Ladeeinrichtung simultan eine erste Batterie und mindestens eine zweite, vorzugsweise eine dritte oder vierte Batterie, simultan aufladen kann. Dabei bedeutet ein simultanes Aufladen nicht, dass sämtliche Batterien zum gleichen Zeitpunkt mit dem Aufladen beginnen müssen. Vielmehr ist es möglich, dass die Batterien sequentiell an die Ladeeinrichtung angeschlossen und von dieser dann aufgeladen werden, wobei dann gleichzeitig mehrere, beispielsweise mindestens zwei, Batterien aufgeladen werden. Mithin ist also die Ladeeinrichtung zu einem kumulativen Aufladen mehrerer Batterien ausgestaltet.

Die erste maximale elektrische Leistung ist zweckmäßigerweise derart ermittelbar oder wird derart ermittelt, dass in dem ersten Ladezeitabschnitt mindestens eine zweite elektrische Batterie durch die stationäre Ladeeinrichtung aufladbar ist. Mithin behält sich also die Ladeeinrichtung sozusagen eine Reserve vor, in welcher sie oder mit der sie eine weitere, zweite elektrische Batterie aufladen kann, auch wenn die erste Batterie schon mit der maximalen ersten elektrischen Leistung aufgeladen wird.

Weiterhin vorteilhaft ist es, wenn das Verfahren vorsieht, dass die stationäre Ladeeinrichtung mindestens eine zweite elektrische Batterie während des mindestens einen zweiten Ladezeitabschnittes der ersten elektrischen Batterie aufladen kann oder auflädt. An dieser Stelle kommt der erfindungsgemäße Gedanke zum Tragen, dass in dem zweiten Ladezeitabschnitt sozusagen Kapazität zum Aufladen weiterer Batterien, beispielsweise der zweiten elektrischen Batterie zur Verfügung steht.

Nachfolgend wird deutlich, wie mehrere Batterien, beispielsweise zwei elektrische Batterien oder weitere elektrische Batterien anhand des erfindungsgemäßen Verfahrens simultan und/oder kumulativ aufgeladen werden. Bevorzugt ist nämlich vorgesehen:
Ermitteln eines jeweils ersten Ladezeitraums und einer ersten elektrischen Leistung für die erste Batterie und die mindestens eine zweite Batterie, sowie Ermitteln jeweils mindestens eines zweiten Ladezeitraums für die erste und mindestens eine zweite Batterie, wobei dem jeweiligen zweiten Ladezeitraum eine jeweilige zweite maximale elektrische Leistung zugeordnet ist. Die Batterien sind in den ihnen zugeordneten Ladezeiträumen simultan aufladbar und die jeweiligen ersten maximalen elektrischen Leistungen um denselben Faktor oder unterschiedliche Faktoren größer als die jeweiligen zweiten elektrischen Leistungen. Dabei sei erwähnt, dass die ersten elektrischen Leistungen von einander verschieden sein können, ebenso die zweiten elektrischen Leistungen oder weitere elektrische Leistungen. Es ist weiterhin möglich, dass beispielsweise die zweite elektrische Leistung für die mindestens eine zweite Batterie größer als die erste elektrische Leistung für die erste Batterie ist. Das Verfahren ist also hoch dynamisch. Insbesondere ist es möglich, dass die maximalen elektrischen Leistungen auf die jeweiligen Batterien bzw. Ladezeiträume abgestimmt sind. Jedenfalls ermöglicht die genannte Vorgehensweise, dass die jeweiligen zweiten maximalen elektrischen Leistungen bzw. die zweiten maximalen elektrischen Leistungen bzw. die zweiten Ladezeiträume Spielräume dafür zulassen, dass weitere Batterien durch die stationäre Ladeeinrichtung aufgeladen werden können.

Bevorzugt ist es, wenn die stationäre Ladeeinrichtung zu einem Ermitteln der in dem jeweiligen Ladezeitraum für alle an die Ladeeinrichtung angeschlossenen Batterien insgesamt bereit zu stellenden maximalen elektrischen Leistung derart ausgestaltet ist, dass sie, nämlich die maximale elektrische Leistung, dieser jeweiligen Batterien einer maximalen Anschlussleistung der Ladeeinrichtung entspricht und die maximale Anschlussleistung der Ladeeinrichtung maximal ausnutzt. Weiterhin ist es vorteilhaft, wenn die maximale Anschlussleistung der Ladeeinrichtung durch die insgesamt bereitgestellten maximalen elektrischen Leistungen nicht überschritten wird. Diese Vorgehensweise funktioniert nicht nur für zwei, sondern auch für weitere an der stationären Ladeeinrichtung anzuschließende oder durch diese aufzuladende Batterien.

Die maximale Anschlussleistung der Ladeeinrichtung ist beispielsweise durch deren elektrische Grenzwerte, beispielsweise deren elektrische Komponenten, limitiert. Es ist aber auch möglich, dass die maximale Anschlussleistung durch das Netz definiert ist, welches die Ladeeinrichtung mit elektrischer Energie versorgt. Mithin ist also die Ladeeinrichtung auch dazu in der Lage, mit einem im Netz angeordneten Lademanager oder einer Netzverteilungseinrichtung zu kommunizieren, um die jeweils bereitstellbare maximale Anschlussleistung in Erfahrung zu bringen. Somit ist es also auch möglich, dass die maximale Anschlussleistung der Ladeeinrichtung nicht zeitlich konstant ist, sondern einen zeitlichen Verlauf bzw. zeitliche Schwankungen aufweist.

Das Verfahren gemäß der Erfindung sieht vorzugsweise ein Anbieten mindestens einer gegenüber der zweiten maximalen Leistung höheren dritten maximalen Leistung für einen sich an den ersten Ladezeitraum anschließenden dritten Ladezeitraum durch die stationäre Ladeeinrichtung an die Batterie-Ladesteuerungseinrichtung vor, falls eine dafür erforderliche Ladekapazität oder elektrische Leistung der stationären Ladeeinrichtung in dem dritten Ladezeitraum zur Verfügung steht. Wenn sich also beispielsweise herausstellt, dass in dem zweiten Ladezeitraum nicht nur die maximale zweite elektrische Leistung zur Verfügung gestellt werden kann, weil beispielsweise keine weitere Batterie an die Ladeeinrichtung angeschlossen wird, kann die Ladeeinrichtung anbieten, dass die frei gewordene oder frei gebliebene Ladekapazität oder elektrische Leistung der stationären Ladeeinrichtung einer oder mehreren der angeschlossenen Batterien zur Verfügung gestellt wird. Ob die Batterien bzw. die Batterie-Ladesteuerungseinrichtungen dieses Angebot dann wahrnehmen, hängt von deren jeweiligem Lademanagement ab. Wenn jedoch eine Batterie-Ladesteuerungseinrichtung das Angebot der Nutzung der höheren dritten maximalen Leistung in Anspruch nimmt, kann der Ladevorgang für die aufzuladende Batterie kürzer ausfallen. Dadurch erhöhen sich die Spielräume für das Anschließen weiterer Batterien an die stationäre Ladeeinrichtung weiter.

Es ist auch möglich, dass die Ladeeinrichtung eine Verlängerung des ersten Ladezeitabschnittes anbietet und die erste Batterie unter Nutzung der ersten maximalen Leistung oder einer gegenüber der zweiten maximalen elektrischen Leistung höheren elektrischen Leistung während des verlängerten ersten Ladezeitabschnittes aufgeladen wird, falls deren Batterie-Ladesteuerungseinrichtung das Verlängerungsangebot annimmt oder angenommen hat. Somit kann also die bereits angeschlossene Batterie mit der höheren ersten maximalen elektrischen Leistung oder jedenfalls einer Leistung, die höher ist als an sich in dem zweiten und weiteren Zeitraum zur Verfügung stünde, für eine verlängerte Zeit aufgeladen werden, falls die Kapazität der stationären Ladeeinrichtung nicht für andere Batterien erforderlich ist. Mithin eignet sich der vorgenannte Schritt also für ein solches Szenario, bei dem in dem zweiten Ladezeitabschnitt keine weitere Batterie an die Ladeeinrichtung angeschlossen wird.

Ein bevorzugtes Konzept der Erfindung sieht eine Art Neuverhandlung eines oder mehrerer Ladepläne zwischen der stationären Ladeeinrichtung und der Batterie-Ladesteuerungseinrichtung vor. Die stationäre Ladeeinrichtung kann somit auf sich verändernde Gegebenheiten reagieren. Wenn also beispielsweise in dem mindestens einen zweiten Ladezeitabschnitt wider Erwarten eine höhere oder andere maximale Leistung bereitgestellt werden kann als dies im an sich aktiven bzw. ausgehandelten Ladeplan vorgesehen ist, kann die stationäre Ladeeinrichtung einen weiteren, zweiten Ladeplan an die Batterie-Ladesteuerungseinrichtung versenden, indem die stationäre Ladeeinrichtung andere Ladezeitabschnitte und/oder andere in diesen Ladezeitabschnitten vorgesehene elektrische Leistungen anbietet. Die Erfindung sieht also ein Anbieten mindestens eines zweiten Ladeplans durch die stationäre Ladeeinrichtung nach zumindest teilweiser Nutzung oder Abarbeitung des oder eines vorherigen Ladeplans vor, der einen ersten Ladeplan bildet. In dem mindestens einen zweiten Ladeplan angebotene maximale elektrische Leistungen und/oder den Leistungen zugeordnete Ladezeitabschnitte sind von dem ersten Ladeplan verschieden. Diese Vorgehensweise ist schon während des ersten Ladezeitabschnitts des ersten Ladeplans möglich. Beispielsweise kann die stationäre Ladeeinrichtung dann, wenn sie die an sich angebotene erste elektrische Leistung nicht liefern kann oder sogar noch mehr elektrische Leistung liefern kann, einen weiteren Ladeplan, der einen zweiten Ladeplan bildet, anbieten. Die Batterie-Ladesteuerungseinrichtung kann diesen weiteren, zweiten Ladeplan annehmen oder nicht. Sofern die Batterie-Ladesteuerungseinrichtung den weiteren Ladeplan oder die weiteren Ladepläne annimmt, erfolgt die Aufladung der Batterien entsprechend diesem weiteren Ladeplan. Ohne weiteres kann das Verfahren mehrfach wiederholt werden oder iterativ vorgenommen werden. Weiterhin ist es möglich, dass die stationäre Ladeeinrichtung mehrere Ladepläne gleichzeitig anbietet, während noch der erste Ladeplan sozusagen abgearbeitet wird, d.h. die Batterie gemäß dem ersten Ladeplan aufgeladen wird. Somit hat die Batterie-Ladesteuerungseinrichtung eine

Auswahl zwischen mindestens zwei Ladeplänen, die sozusagen nachverhandelt werden.

Weiterhin kann diese Nachverhandlungspraxis oder Nachverhandlungsprozedur iterativ wiederholt werden. Dadurch ergibt sich ein hochdynamischer Prozess.

Bevorzugt ist es, wenn die stationäre Ladeeinrichtung einen veränderten Ladeplan sozusagen anbietet und die Batterieladesteuerungseinrichtung nicht verpflichtet ist, diesen Ladeplan anzunehmen. Es ist aber prinzipiell denkbar und möglich, dass in besonderen Lastsituationen, wenn also ein aktueller Ladeplan nicht erfüllbar ist oder nur unter schwierigen Randbedingungen erfüllbar ist, die stationäre Ladeeinrichtung einen Ladeplan sozusagen als Zwangsladeplan anbietet. Die Batterie-Ladesteuerungseinrichtung muss diesen weiteren Ladeplan in diesem Fall annehmen, beispielsweise um eine Überlastsituation zu verhindern. Grundsätzlich ist aber ein sozusagen freiwilliges Verfahren angestrebt, d.h. dass die stationäre Ladeeinrichtung einen veränderten Ladeplan zwar anbietet, die Batterie-Ladesteuerungseinrichtung aber nicht verpflichtet ist, diesen weiteren Ladeplan anzunehmen.

In jedem weiteren Ladeplan, den die stationäre Ladeeinrichtung anbietet, ist es ebenfalls zweckmäßig, wenn in einem ersten Ladezeitabschnitt eine höhere maximalelektrische Leistung angeboten ist als in mindestens einem zweiten weiteren Ladezeitabschnitt. Somit sieht also auch der "Folge-Ladeplan" vor, dass zunächst mit höherer Leistung aufgeladen wird, später mit geringerer Leistung, um sozusagen Spielräume für den Anschluss weiterer aufzuladender Batterien an die Ladeeinrichtung zu schaffen.

Die stationäre Ladeeinrichtung ist beispielsweise als eine Ladesäule ausgestaltet. Die stationäre Ladeeinrichtung kann auch einen Bestandteil eines Gebäudes bilden. Die stationäre Ladeeinrichtung weist beispielsweise ein Gehäuse mit einem elektrischen Anschluss, insbesondere einem Anschlusskabel, auf. Weiterhin kann die stationäre Ladeeinrichtung auch ein induktives Laden vorsehen, d.h. dass sie ein induktives Lademittel oder sonstiges drahtloses Lademittel zum Aufladen der Batterie, insbesondere Fahrzeugbatterie, aufweist.

Besonders bevorzugt ist es, wenn die erste maximale elektrische Leistung derart ermittelt wird, dass die Batterie und mindestens eine zweite Batterie, vorzugsweise weitere Batterien unter maximaler Ausnutzung der Anschlussleistung der stationären Ladeeinrichtung an dieser Ladeeinrichtung aufgeladen werden. Mithin wird also die vorhandene Ladekapazität der Ladeeinrichtung optimal für die jeweils aktuell angeschlossenen Batterien ausgenutzt oder genutzt.

An sich wird die Batterieladesteuerungseinrichtung die ihr angebotene maximale elektrische Leistung möglichst optimal nutzen, um auf diesem Wege sicher zu stellen, dass die Batterie auch vollständig oder jedenfalls im geplanten Umfang aufgeladen wird. Üblich ist es aber auch, dass die angebotene maximale elektrische Leistung der stationären Ladeeinrichtung höher ausfällt als der tatsächliche Bedarf der aufzuladenden Batterie. Mithin ist also ein Anreizsystem vorteilhaft, derart, dass die Batterie-Ladesteuerungseinrichtung möglichst umfangreich und vollständig die ihr angebotene jeweilige maximale Leistung nutzt, damit für den Fall, dass weitere elektrische Batterien an die stationäre Ladeeinrichtung angeschlossen werden, die Ladekapazität der stationären Ladeeinrichtung für diese anderen Batterien genutzt werden können. Bevorzugt ist daher ein Versenden mindestens einer Präferenzinformation zu dem Ladeplan durch die stationäre Ladeeinrichtung an die Batterie-Ladesteuerungseinrichtung oder die Batterie-Ladesteuerungseinrichtungen, wobei die jeweilige Ladesteuerungseinrichtung durch die Präferenzinformation zu einer maximalen Nutzung der ersten maximalen elektrischen Leistung stimuliert wird. Beispielsweise versendet die Ladeeinrichtung eine Preisinformation, insbesondere eine Preistabelle, zu dem Ladeplan. Für die Batterie-Ladesteuerungseinrichtung ist es also besonders günstig, die ihr angebotene maximale elektrische Leistung insbesondere in dem ersten Ladezeitabschnitt maximal auszunutzen und somit die Ladekapazität, die ihr angeboten wird, auch anzunehmen. Dadurch ist die Batterie schon in dem ersten Ladezeitraum möglichst gut aufgeladen, weshalb dann die Ladekapazität der Ladeeinrichtung für andere Batterien in dem zweiten oder weiteren Ladezeitabschnitt zur Verfügung steht.

Die stationäre Ladeeinrichtung kann die Ladezeitabschnitte nach einem festen Schema ermitteln. So ist es beispielsweise möglich, dass ein jeweiliger erster Ladezeitabschnitt immer zehn Minuten oder fünfzehn Minuten beträgt oder auch beispielsweise eine Stunde. Es ist aber auch möglich, dass die Ladeeinrichtung in diesem Fall dynamisch arbeitet, so dass sie beispielsweise den ersten Ladezeitabschnitt und/oder mindestens einen zweiten oder weitere Ladezeitabschnitte in Abhängigkeit von mindestens einem Vorgabewert, der beispielsweise gespeichert oder von extern an die Ladeeinrichtung gesendet wird, ermittelt. In Abhängigkeit von einem derartigen Vorgabewert kann aber auch die erste maximale elektrische Leistung und/oder mindestens eine zweite oder weitere maximale elektrische Leistung durch die Ladeeinrichtung ermittelt werden.

Der Vorgabewert ist beispielsweise eine Tageszeit. So kann beispielsweise vorgesehen sein, dass in Zeiträumen, in denen typischerweise eine hohe Auslastung eines die Ladeeinrichtung mit elektrischem Strom versorgenden Netzes vorliegt und/oder typischerweise mehrere Fahrzeugbatterien an der Ladeeinrichtung aufzuladen sind, der erste Ladezeitabschnitt kürzer ist als in anderen Zeitphasen bzw. zu anderen Zeitabschnitten. An diesem Beispiel wird auch deutlich, dass auch ein Auslastungsverlauf eines die stationäre Ladeeinrichtung mit elektrischer Energie versorgenden Netzes den Vorgabewert bestimmen oder beeinflussen kann. Selbstverständlich sind mehrere Vorgabewerte nötig, d.h. beispielsweise ein Vorgabewert für die Tageszeit und ein Vorgabewert für den Auslastungsverlauf des die Ladeeinrichtung mit Strom versorgenden Netzes. Weiterhin kann auch ein Nutzungsverlauf der stationären Ladeeinrichtung mindestens einen Vorgabewert darstellen. Wenn also beispielsweise die Ladeeinrichtung zu Randzeiten, insbesondere tagsüber, wenig genutzt wird, können in diesen Zeitabschnitten größere erste Ladezeitabschnitte bereitgestellt werden als in anderen Zeiten, beispielsweise nachts. Es ist aber auch möglich, dass gerade nachts eine langsame Aufladung typisch und bevorzugt ist, so dass für eine über Nacht geplante Aufladung einer Batterie vorsieht, dass der erste Ladezeitabschnitt besonders kurz ist, weil ja ein langer zweiter Ladezeitabschnitt zum vollständigen Aufladen oder jedenfalls wunschgemäßen Aufladen der Batterie zur Verfügung steht.

Die erste maximale elektrische Leistung ist zweckmäßigerweise mindestens zweimal, vorzugsweise dreimal, viermal oder fünfmal größer als die zweite maximale elektrische Leistung. Somit wird sichergestellt, dass in dem ersten Ladezeitabschnitt möglichst viel elektrische Leistung zur Verfügung steht, d.h. die jeweils angeschlossene Batterie optimal aufgeladen wird.

Weiterhin ist es zweckmäßig, dass der erste Ladezeitabschnitt besonders kurz ist, beispielsweise nur halb so lang wie der zweite Ladezeitabschnitt ist. Bevorzugt ist der zweite Ladezeitabschnitt jedoch dreimal, viermal oder fünfmal so lang wie der erste Ladezeitabschnitt.

Um jedoch der Batterie-Ladesteuerungseinrichtung gewisse Spielräume zum Abrufen der elektrischen Energie oder Leistung bei der stationären Ladeeinrichtung zu geben, ist es bevorzugt, dass die in dem ersten Ladezeitabschnitt und dem mindestens einen zweiten Ladezeitabschnitt jeweils bereit gestellte maximale elektrische Leistung mindestens zur Bereitstellung der durch die Ladebedarfsangabe definierte Anforderungsenergiemenge ausreicht oder diese um einen Übererfüllungsfaktor, beispielsweise 1,2 oder 1,3 übertrifft. Somit ist also die Batterie-Ladesteuerungseinrichtung nicht gezwungen, die ihr angebotene elektrische Leistung jeweils vollständig auszunutzen, so dass sie beispielsweise die Aufladung der Batterie optimal regeln oder steuern kann. So kann beispielsweise auf die jeweilige Temperatursituation der Batterie Einfluss genommen werden. Wenn während des Aufladens festgestellt wird, dass die Batterie zu warm wird, kann die von der Ladeeinrichtung abgenommene elektrische Leistung reduziert werden. Wenn andererseits die Batterie eine vollständige Aufladung mit der ihr angebotenen elektrischen Leistung, beispielsweise der ersten, zweiten oder dritten maximalen elektrischen Leistung ermöglicht, wird diese maximale elektrische Leistung durch die Batterie-Ladesteuerungseinrichtung entsprechend abgerufen. Nachfolgend wird ein Ausführungsbeispiel der Erfindung anhand der Zeichnung erläutert. Es zeigen:
- Figur 1: ein schematisch dargestelltes System zur Ausführung des Verfahrens gemäß der Erfindung,
- Figur 2: ein Kommunikationsablaufdiagramm bei einem Ladevorgang gemäß der Erfindung,
- Figur 3: zeitliche Verläufe von elektrischen Leistungen, die an Ladeanschlüssen bereitgestellt werden in einer ersten Variante und
- Figur 4: ein weiteres Leistungsdiagramm im Rahmen der Bereitstellung von elektrischer Leistung.

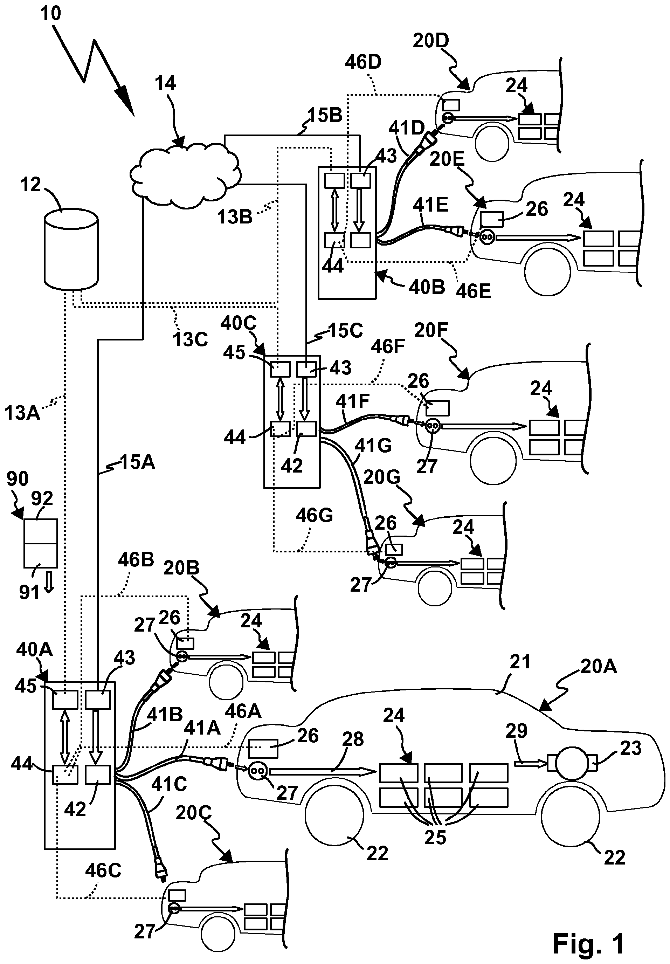

Ein in Figur 1 dargestelltes System 10 umfasst beispielsweise einen Lademanager 12 sowie ein Energieversorgungsnetz 14, an welches Ladeeinrichtungen 40A, 40B und 40C angeschlossen sind. Selbstverständlich können auch weitere Verbraucher, Ladeeinrichtungen und dergleichen an das Energieversorgungsnetz 14 anschließbar oder angeschlossen sein, beispielsweise Haushalte, Industriebetriebe oder dergleichen.

Der Lademanager 12 steht exemplarisch für ein übergeordnetes Lademanagement innerhalb des Energieversorgungsnetzes 14, mit dem beispielsweise eine typische Netzverteilung, in deren Rahmen beispielsweise auch Lastabwürfe oder dergleichen notfalls durchgeführt werden. Auf diese Details kommt es jedoch im Einzelnen nicht an. Jedenfalls ist der Lademanager 12, bei dem es sich auch um ein komplexes Serversystem handeln kann, über Kommunikationsverbindungen 13A, 13B und 13C mit den Ladeeinrichtungen 40A, 40B und 40C verbunden. Die Kommunikationsverbindungen 13 können beispielsweise leitungsgebundene und/oder drahtlose Verbindungen sein. Die Ladeeinrichtungen 40A, 40B und 40C kommunizieren über die jeweilige Kommunikationsverbindung 13A, 13B und 13C anhand von Netz-Kommunikationseinrichtungen 45 mit dem Lademanager 12. Die Ladeeinrichtungen 40A sind über Energie-Versorgungsleitungen 15A, 15B und 15C mit dem Energieversorgungsnetz 14 verbunden. Bei den Versorgungsleitungen 15A, 15B und 15C kann es sich beispielsweise um Wechselstrom-, Gleichstrom- oder Drehstromleitungen oder dergleichen handeln. Mithin erfolgt die Energieversorgung des Energieversorgungsnetzes 14 vorzugsweise zwar mit Wechselstrom, kann aber auch über Gleichstromübertragung realisiert sein.

Das Energieversorgungsnetz 14 kann tageszeitabhängig, also beispielsweise von externen Faktoren abhängig, Energie für die Ladeeinrichtungen 40A, 40B, 40C bereitstellen, so dass diese an sie angeschlossene oder gegebenenfalls anschließbare Fahrzeuge 20A-20G aufladen können. Die Anordnung und die Anschlusssituation der Fahrzeuge 20A-20G sind exemplarisch zu verstehen und können sich im zeitlichen Ablauf ändern.

Die Fahrzeuge 20 weisen jeweils eine Karosserie 21 auf, die beispielsweise eine Fahrgastzelle, Transportraum für Gepäck oder dergleichen bereits. Die Fahrzeuge 20 sind vorzugsweise nicht schienengebundene Fahrzeuge, deren Räder 22 durch Antriebsmotoren 23 angetrieben werden. Die Fahrzeuge 20 können aber auch Nutzfahrzeuge oder Zweiräder sein, beispielsweise Elektrofahrräder. Die für den Betrieb der Antriebsmotoren 23 notwendige Energie wird von einer Batterie 24 bereitgestellt, deren Speicherzellen 25 exemplarisch beim Fahrzeug 20A dargestellt sind. Die Aufladung und zweckmäßigerweise auch Entladung der Batterie 24 übernimmt eine Batterie-Ladesteuerungseinrichtung 26. Anhand eines elektrischen Anschlusses 27 kann ein jeweiliges Fahrzeug 20 mit elektrischer Energie versorgt werden, um die Batterie 24 aufzuladen. Zwischen dem elektrischen Anschluss 27 und den Batterien 24 ist eine Ladeverbindung 28 durch einen Pfeil exemplarisch darstellt. Die Energieversorgung des Antriebsmotors 23 durch die Batterie 24 ist durch eine Versorgungsverbindung 29 schematisch angedeutet.

Die Ladeeinrichtungen 40 weisen einen oder mehrere elektrische Ladeanschlüsse 41 auf. Beispielsweise hat die Ladeeinrichtung 40A elektrische Ladeanschlüsse 41A, 41B, 41C, an die gleichzeitig mehrere Fahrzeuge oder sonstige Batterien enthaltende Komponenten, beispielsweise die Fahrzeuge 20A, 20B und 20C anschließbar sind. Die Ladeeinrichtung 40B kann über ihre Ladeanschlüsse 41C und 41D nacheinander oder simultan die Fahrzeuge 20D und 20E mit elektrischer Energie versorgen bzw. deren Batterien 24 aufladen. Die Ladeeinrichtung 40C ist exemplarisch in einer Situation dargestellt, bei der an ihre elektrischen Ladeanschlüsse 41F und 41G die Fahrzeuge 20F und 20G zum Aufladen angeschlossen sind. Die Ladeanschlüsse 41 umfassen beispielsweise elektrische Anschlussleitungen, Stecker oder dergleichen. Die Ladeanschlüsse 41 können aber auch ein berührungsloses Ladesystem umfassen, beispielsweise ein induktives Ladesystem.

Die elektrischen Ladeanschlüsse 41 sind beispielsweise mit einem elektrischen Verteiler 42 einer jeweiligen Ladeeinrichtung 40 verbunden. Der Verteiler 42 seinerseits ist wiederum mit einem Netzanschluss 43 der Ladeeinrichtung 40 verbunden. Der Netzanschluss 43 ist an die Versorgungsleitung 15 angeschlossen. Der Verteiler 42 weist beispielsweise Stromüberwachungsmittel auf, so dass die jeweils über die elektrischen Ladeanschlüsse 41A, 41G bereitgestellte elektrische Leistung bzw. der elektrische Strom nicht überschritten wird oder sich in einem vorbestimmten Rahmen bewegt. Die Netzanschlüsse 43 können Sicherungen oder dergleichen enthalten.

Zur Kommunikation mit der jeweiligen Batterie-Ladesteuerungseinrichtung 26 weisen die Ladeeinrichtungen 40 zudem noch eine Batterie-Kommunikationseinrichtung 44 auf, die über eine jeweilige Kommunikationsverbindung 46A-46C mit einem jeweiligen Fahrzeug 20A-20G bzw. deren Batterie-Ladesteuerungseinrichtung 26 kommuniziert. Ohne weiteres können die elektrischen Ladeanschlüsse 41 oder Anschlussleitungen auch die Kommunikationsverbindung 46 realisieren, beispielsweise durch zu Stromleitungen zusätzlich vorgesehenen Übertragungsleitungen. Es ist weiterhin möglich, dass mindestens eine der Kommunikationsverbindungen 46 drahtlos ist, d.h. dass die Ladeeinrichtung 40 mit der Batterie-Ladesteuerungseinrichtung 26 drahtlos, z.B. über WLAN, Bluetooth oder dergleichen kommuniziert.

Eine jeweilige Ladeeinrichtung 40 weist beispielsweise einen Prozessor 47 auf, der zum Ausführen von Programmcodes eines Programmmoduls 49 ausgestaltet ist. Das Programmmodul 49 sowie optional weitere Informationen, beispielsweise Parameterwerte, Maximalwerte oder dergleichen, können in einem Speicher 48 der Ladeeinrichtung 40 gespeichert sein. Der Prozessor 47 bedient eine Kommunikationsschnittstelle 50, beispielsweise eine Busschnittstelle, eine WLAN-Schnittstelle oder dergleichen.

Die Batterie-Ladesteuerungseinrichtung weist ebenfalls eine Datenverarbeitungseinheit auf. Beispielsweise umfasst die Batterie-Ladesteuerungseinrichtung einen Prozessor 30 und einen Speicher 31, in welchem ein Programmmodul 32 zur Kommunikation mit der Ladeeinrichtung 40 und/oder für das Lademanagement der Batterie 24 auf. Die Batterie-Ladesteuerungseinrichtung 26 verfügt weiterhin über eine Kommunikationsschnittstelle 33 zur Kommunikation mit der Kommunikationsschnittstelle 50 über die Kommunikationsverbindung 46.

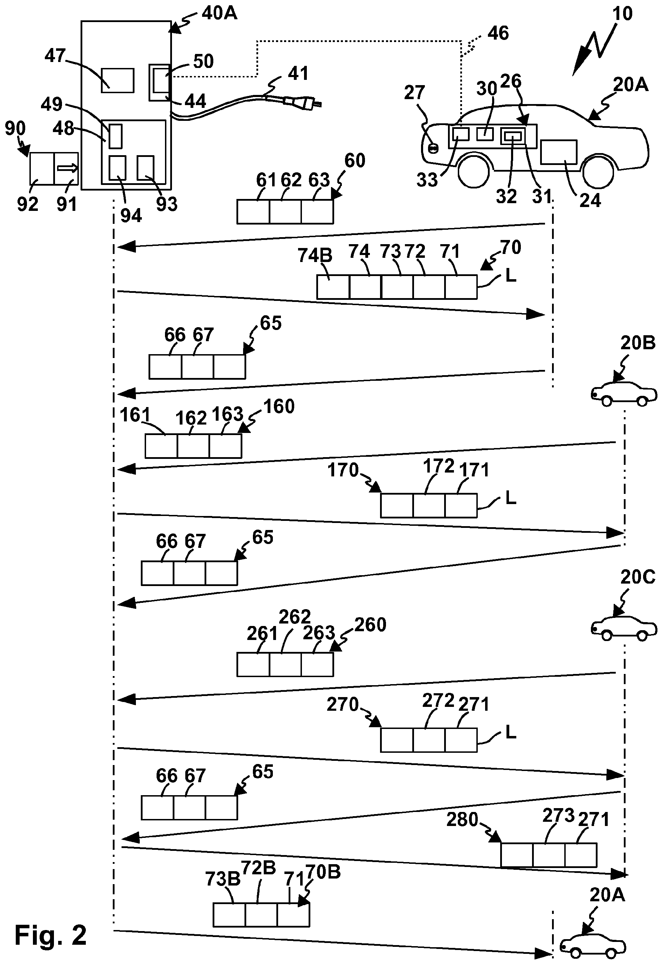

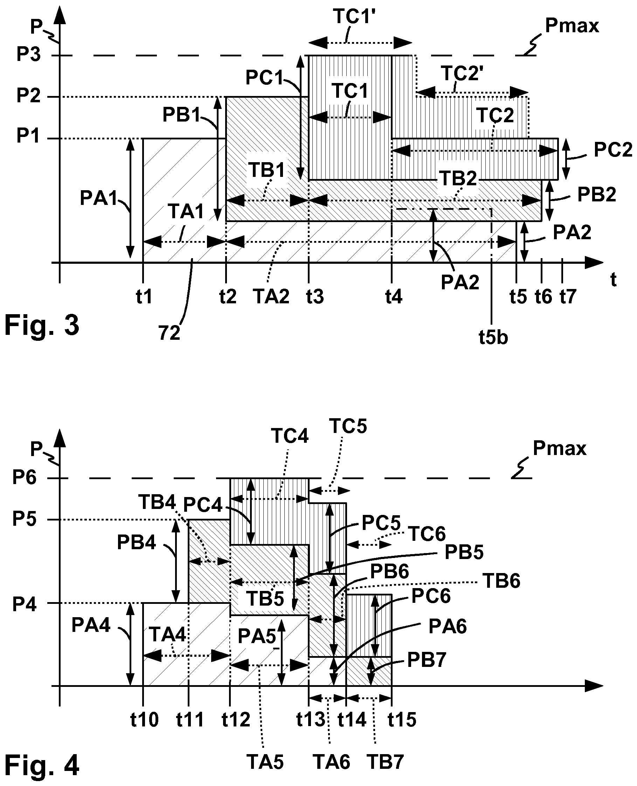

Eine beispielhafte Kommunikation zwischen der Ladeeinrichtung 40A, die schematisch für die anderen Ladeeinrichtungen 40 steht, und einer Batterie-Ladesteuerungseinrichtung 26 ist in Figur 2 schematisch dargestellt. Die Figuren 3 und 4 betreffen Nutzungssituationen bzw. Ladepläne die im Rahmen einer Kommunikation gemäß Figur 2 ausgehandelt bzw. ermittelt werden.

Die Batterie-Ladesteuerungseinrichtung 26 des Fahrzeugs 20A sendet beispielsweise eine Anforderungsnachricht 60 an die Batterie-Ladesteuerungseinrichtung 26. Die Anforderungsnachricht 60 umfasst eine Steuerungsinformation 61, beispielsweise typische Kopfdaten, Adressdaten, Sequenzinformationen oder dergleichen. Weiterhin enthält die Anforderungsnachricht 60 eine Ladebedarfsangabe 62 sowie eine Ladezeitangabe 63. Mit der Ladebedarfsangabe 62 gibt die Batterie-Ladesteuerungseinrichtung 26 ihren Ladebedarf an, mit dem die Batterie 24 aufgeladen werden soll. Beispielsweise enthält die Ladebedarfsangabe 62 eine elektrische Leistungsangabe, eine Energiemenge oder dergleichen. Die zum Aufladen der Batterie 24 bereitstehende Zeit ist in der Ladezeitangabe angegeben. Beispielsweise enthält die Ladebedarfsangabe 62 die Information, dass insgesamt 10 kWh an elektrischer Leistung innerhalb von 4 Stunden zu laden sind.

Die Ladeeinrichtung 40A ermittelt anhand des Programmmoduls 49 aus der Ladebedarfsangabe 62 und der Ladezeitangabe 63 sowie zweckmäßigerweise weiteren Kenndaten, beispielsweise welche elektrischer Energie schon anderweitig bereitgestellt werden muss, wie viele Batterien gleichzeitig aufzuladen sind oder aktuell noch aufzuladen sind oder dergleichen mehr, einen Ladeplan 72 und optional einen Ladeplan 73.

Die Ladeeinrichtung 40A sendet in einer Antwortnachricht 70 die Ladepläne 72, 73 an die Batterie-Ladesteuerungseinrichtung 26. Die Antwortnachricht 70 kann weiterhin eine Steuerungsinformation 71 in der Art der Steuerungsinformation 61, beispielsweise enthaltend die Adresse der Batterie-Ladesteuerungseinrichtung 26, umfassen. Die Antwortnachricht 70 bildet beispielsweise eine Ladeplan-Nachricht L.

In einer Akzeptanznachricht 65, die beispielsweise eine Steuerungsinformation 66 sowie eine Akzeptanzinformation 67 enthält, akzeptiert die Batterie-Ladesteuerungseinrichtung 26 den Ladeplan 72 oder den Ladeplan 73 zur nachfolgenden Aufladung. Die Akzeptanzinformation 67 nennt beispielsweise den Ladeplan 72 oder 73 als akzeptierten Ladeplan.

Es ist möglich, dass die Akzeptanznachricht 65 innerhalb einer vorbestimmten Zeitspanne zu senden ist, damit die stationäre Ladeeinrichtung 40 den Ladeplan 72 oder 73 als verbindlichen Ladeplan akzeptiert. Diese Zeitspanne kann beispielsweise vorbestimmt sein.

Es ist aber auch möglich, dass die stationäre Ladeeinrichtung 40 ein Zeitfenster vorgibt, innerhalb dessen ein Ladeplan zu akzeptieren ist. So kann beispielsweise in der Antwortnachricht 70 eine Zeitinformation 74B enthalten sein, mit der die stationäre Ladeeinrichtung 40 vorgibt, innerhalb welcher Zeit die Akzeptanznachricht 65 zu versenden und/oder zu empfangen ist. Wenn die Batterie-Ladesteuerungseinrichtung 26 die Akzeptanznachricht 65 nicht innerhalb der durch die Zeitinformation 74B vorgegebenen Zeit sendet oder diese innerhalb dieser Zeit nicht von der stationären Ladeeinrichtung 40 empfangen wird, kann die stationäre Ladeeinrichtung 40 die an sich für die Batterie-Ladesteuerungseinrichtung 26 reservierte elektrische Leistung anderweitig vergeben oder anbieten.

Es ist möglich, dass der Ladeplan 72 oder 73 erst dann für die stationäre Ladeeinrichtung 40 verbindlich ist, wenn er durch die Akzeptanznachricht 65 akzeptiert ist. Es ist aber auch möglich, dass sich die stationäre Ladeeinrichtung 40 an den vorgeschlagenen Ladeplan 72 oder 73 halten muss, wenn keine Akzeptanznachricht 65 von der Batterie-Ladesteuerungseinrichtung 26 gesendet wird. Insbesondere ist ein derartiges Szenario möglich, wenn die stationäre Ladeeinrichtung 40 nur einen einzigen Ladeplan sendet, also keine Alternativen anbietet.

Die Anforderungsnachricht 60, die Antwortnachricht 70 und die Akzeptanznachricht 65 sind beispielsweise entsprechend einem der Standards ISO-IEC-15118 oder DINSpec70121 oder SAE J2847 aufgebaut.

Bei der Ermittlung der Ladepläne 72, 73 oder weiterer Ladepläne geht die Ladeeinrichtung 40 erfindungsgemäß vor, was exemplarisch anhand der Figuren 3 und 4 deutlicher wird.

Die Ladeeinrichtung 40A stellt nämlich in dem Ladeplan 72 der Batterie-Ladesteuerungseinrichtung 26 für einen ersten Ladezeitabschnitt TA1 eine erste maximale elektrische Leistung PA1 und für einen darauf folgenden zweiten Ladezeitabschnitt einen zweite maximale elektrische Leistung PA2 zur Verfügung. Die erste elektrische Maximalleistung PA1 ist deutlich größer, beispielsweise dreimal so hoch, wie die zweite maximale elektrische Leistung PA2. Allerdings ist der erste Ladezeitabschnitt TA1 deutlich kürzer als der zweite Ladezeitabschnitt TA2. Somit kann ein deutlicher oder wesentlicher Teil der Energie, die zum Aufladen der Batterie 24 des Fahrzeugs 20A erforderlich ist, bereits im ersten Ladezeitabschnitt TA1 abgerufen werden. Die an sich bereitstehende elektrische maximale Anschlussleistung Pmax wird dabei noch nicht ausgenutzt.

Exemplarisch ist dargestellt, dass die Batterie-Ladesteuerungseinrichtung 26 zwischen Zeitpunkten t1 und t2 die erste maximale elektrische Leistung PA1 abruft und zwischen Zeitpunkten t2 und t5 die zweite maximale elektrische Leistung PA2. Damit ist die Batterie 24 entsprechend der Ladebedarfsangabe 62 aufgeladen. Der "Ladewunsch" beispielsweise des Fahrzeugs 20A ist erfüllt.

Wenn jedoch ein weiteres Fahrzeug, beispielsweise das Fahrzeug 20B zum Aufladen seiner Batterie 24 ansteht, sendet dessen Batterie-Ladesteuerungseinrichtung 26 eine Anforderungsnachricht 160 in der Art der Anforderungsnachricht 60 an die Ladeeinrichtung 40A, welche anhand einer Antwortnachricht 170, also einer Ladeplan-Nachricht L, beispielsweise einen Ladeplan 172 anbietet. Die Anforderungsnachricht 160 umfasst beispielsweise eine Steuerungsinformation 161, eine Ladebedarfsangabe 162 sowie eine Ladezeitangabe 163. Die Antwortnachricht 170 umfasst beispielsweise eine Steuerungsinformation 171 sowie einen Ladeplan 172. Die Batterie-Ladesteuerungseinrichtung 26 des Fahrzeugs 20B akzeptiert den Ladeplan 172 mit der erläuterten Akzeptanznachricht 65.

Entsprechend dem Ladeplan 172 kann die Batterie-Ladesteuerungseinrichtung 26 des Fahrzeugs 20B eine erste elektrische maximale Leistung PB1 in einem ersten Ladezeitabschnitt TB1 und eine zweite maximale elektrische Leistung PB2 in einem zweiten Ladezeitabschnitt TB2 abrufen. Da die Aufladung der Batterie 24 des Fahrzeugs 20B erst zum Zeitpunkt t2 beginnt, wenn für das Fahrzeug 20A nur noch die kleinere maximale elektrische Leistung PA2 bereitgestellt wird, kann für das Fahrzeug 20B eine vergleichsweise große maximale elektrische Leistung PB1 bereitgestellt werden. Wiederum folgt die Ladeeinrichtung 40 dem bereits erwähnten Schema, dass nämlich die erste elektrische Leistung PB1 größer als die zweite elektrische Leistung PB2 ist, während der erste Ladezeitabschnitt TB1 kleiner ist als der zweite Ladezeitabschnitt TB2 ist.

Zum Zeitpunkt t3 endet der Ladezeitabschnitt TB1. In dieser Situation, d.h, wenn die beiden Fahrzeuge 20A, 20B bereits eine große Energiemenge erhalten haben, um deren Batterien 24 aufzuladen, wird das Fahrzeug 20C an die Ladeeinrichtung 40A angeschlossen. Die Batterie-Ladesteuerungseinrichtung 26 fordert ebenfalls eine Aufladung an, sendet also beispielsweise einen Anforderungsnachricht 260 mit einer Steuerungsinformation 261, einer Ladebedarfsangabe 262 sowie eine Ladezeitangabe 263 an die Ladeeinrichtung 40A, welche ihrerseits mit einer Antwortnachricht 270, einer Ladeplan-Nachricht L, einen Ladeplan 272 anbietet. Die Antwortnachricht 270 enthält beispielsweise noch eine Steuerungsinformation 271. Die Batterie-Ladesteuerungseinrichtung 26 des Fahrzeugs 20C akzeptiert den Ladeplan 272 mit der erläuterten Akzeptanznachricht 65 oder einer dieser entsprechenden Akzeptanznachricht.

Der Ladeplan 272 sieht ebenfalls eine Aufladung in einem ersten kürzeren Abschnitt mit größerer maximaler Leistung, nämlich in einem Ladezeitabschnitt TC1 mit einer maximalen Leistung PC1 vor, während im Anschluss daran die maximal abzugebende oder bereitgestellte elektrische Leistung PC2 kleiner als die elektrische PC1 ist, dafür aber der Ladezeitabschnitt TC2 größer als der Ladezeitabschnitt TC1 ist.

Zum Zeitpunkt t3, wenn der Ladeplan 272 sozusagen in Kraft tritt oder abgerufen werden kann, sind die beiden Batterien 24 der Fahrzeuge 20A und 20B schon weitgehend aufgeladen. Mithin erkennt man also, dass durch die dynamische schnelle Aufladung der Batterien 24 der Fahrzeuge 20A und 20B bei der Ladeeinrichtung 40A Spielraum vorhanden ist, auch dem Fahrzeug 20C eine hohe anfängliche Leistung bereit zu stellen.

Zum Zeitpunkt t4 endet die sozusagen schnelle Aufladung oder maximale Aufladung der Batterie 24 des Fahrzeuges 20C, so dass insgesamt nur noch eine Leistung P1 durch die Fahrzeuge 20A, 20B und 20C bei der Ladeeinrichtung 40A abgerufen wird. In dieser Situation könnte an sich eine weitere Batterie oder ein weiterer Verbraucher an die Ladeeinrichtung 40A angeschlossen werden.

Zwischen den Zeitpunkten t2 und t3 ist die abzugebende Leistung P2 noch etwas höher als die Leistung P1. Zwischen den Zeitpunkten t3 und t4, wenn der Batterie 24 des Fahrzeuges 20 sozusagen die maximale Leistung angeboten wird, die anderen Fahrzeuge 20A und 20B aber noch nicht ganz aufgeladen sind, ist die maximale Anschlussleistung Pmax der Ladeeinrichtung 40A ausgeschöpft, es wird also eine Leistung P3 abgegeben.

Zu den Zeitpunkten t6 und t7 enden die Aufladungen auch der Batterien 24 der Fahrzeuge 20B und 20C.

Möglich ist auch ein Szenario, dass die Ladeeinrichtung 40A zum Zeitpunkt t4 der Batterie-Ladesteuerungseinrichtung 26 des Fahrzeugs 20C anbietet, den Ladezeitabschnitt TC1 zu verlängern, da ja die elektrische Anschlussleistung bzw. der elektrische Strom, den die Ladeeinrichtung 40 an sich zur Batterieaufladung bereitstellen kann, ab dem Zeitpunkt t4 nicht ausgenutzt wird. Die Ladeeinrichtung 40A könnte beispielsweise spontan eine entsprechende Informationsnachricht 280 mit einem veränderten Ladeplan 273 senden. Schematisch ist dies in Figur 3 durch eine Verlängerung des Ladezeitabschnittes TC1 zu einem Ladezeitabschnitt TC1' angedeutet. Der zweite Ladezeitabschnitt TC2 ist dadurch verkürzt zu einem Ladezeitabschnitt TC2'. In dem verlängerten Ladezeitabschnitt TC1' kann beispielsweise die elektrische Leistung PC1 durch die Ladeeinrichtung 40A bereitgestellt werden oder auch eine andere gegenüber der Leistung PC2 höhere elektrische Leistung.

Es ist aber auch möglich, dass die Ladeeinrichtung 40A zum Zeitpunkt t4 einem anderen Fahrzeug 20A oder 20B einen alternativen oder verlängerten Ladeplan anbietet, so z.B. der Batterie-Ladesteuerungseinrichtung 26 des Fahrzeugs 20A. So ist beispielsweise in einer Nachricht 70B, die beispielsweise die bekannte Steuerungsinformation 71 sowie Ladepläne 72B und 72C enthält. In den Ladeplänen 72A oder 72B bietet die stationäre Ladeeinrichtung 40A dem Fahrzeug 20A bzw. dessen Batterie-Ladesteuerungseinrichtung 26 an, ab dem Zeitpunkt t4 nochmals mit vergrößerter Leistung, beispielsweise einer Leistung PA2' (in Figur 3 schematisch angedeutet) aufzuladen, so dass sich die Gesamtladezeit kürzer als der Zeitabschnitt zwischen den Zeitpunkten t1 und t5 ist. Die Batterie 24 des Fahrzeugs 20A ist dann schneller aufgeladen. Die Aufladung der Batterie 24 des Fahrzeugs 20A endet dann beispielsweise zu einem Zeitpunkt t5b. Im Ladeplan 73B wird ein alternativer, ebenfalls eine erhöhte Ladeleistung ab dem Zeitpunkt t4 anbietender Ladeplan vorgeschlagen. Allerdings muss die Ladesteuerungseinrichtung 26 des Fahrzeugs 20A den Ladeplan 72B oder 73B nicht annehmen, sondern kann den Ladeplan 72 weiter erfüllen. Somit wird der Batterie-Ladesteuerungseinrichtung 26 des Fahrzeugs 20A lediglich eine Option bereitgestellt, die nicht erfüllt werden muss. Jedenfalls erkennt man, dass ab dem Zeitpunkt t5b noch mehr Leistung zum Aufladen anderer Batterien als derjenigen der Fahrzeuge 20B und 20C erforderlich ist, frei zum Aufladen anderer Fahrzeuge bzw. deren Batterien zur Verfügung steht.

Nun ist ein Szenario denkbar, bei dem beispielsweise in dem Ladeplan 73 der erste Ladezeitabschnitt TA1 länger ausfällt als im Ladeplan 72. Anhand einer Präferenzinformation 74 in der Antwortnachricht 70 kann die Ladeeinrichtung 40Ader Batterie-Ladesteuerungseinrichtung 26 des Fahrzeugs 20A beispielsweise signalisieren, dass der Ladeplan 72 bevorzugt ist. Die Präferenzinformation 74 kann beispielsweise eine Preisinformation sein. Es ist aber auch möglich, dass die Ladeeinrichtung 40A die Batterie-Ladesteuerungseinrichtung 26 stimulieren will, die ihr angebotene elektrische Leistung PA1 in dem ersten Ladezeitabschnitt TA1 maximal auszuschöpfen. Auch dies kann anhand der Präferenzinformation 74 geschehen.

In Figur 4 ist ein noch dynamischeres Ermitteln von Ladeplänen durch die Ladeeinrichtung 40A angedeutet. Wieder werden die Fahrzeuge 20A-20C bzw. deren Batterien 24 aufgeladen. Zu einem Zeitpunkt t1 ist zunächst das Fahrzeug 20A an die Ladeeinrichtung 40A angeschlossen. Entsprechend der in Figur 2 angedeuteten Kommunikationsprozedur erhält die Batterie-Ladesteuerungseinrichtung 26 des Fahrzeugs 20A einen Ladeplan, der vorsieht, dass während einem ersten Ladezeitabschnitt TA4 eine maximale Leistung PA4 bereitsteht und in einem sich daran anschließenden Ladezeitabschnitt eine geringere Leistung angeboten wird, beispielsweise eine Leistung, die zwischen den in der Zeichnung dargestellten maximalen Leistungen PA5 und PA6 liegt.

Entsprechend diesem Ladeplan wird die Batterie 24 des Fahrzeuges 20A vom Zeitpunkt t10 an aufgeladen, wobei eine Leistung P4 von der Ladeeinrichtung 40 abgerufen wird.

Zu einem Zeitpunkt t11, nach dem Zeitpunkt t10, wird das Fahrzeug 20B an die Ladeeinrichtung 40A angeschlossen. Auch dessen Batterie-Ladesteuerungseinrichtung 26 erhält einen Ladeplan, gemäß dem ab dem Zeitpunkt t11 eine maximale elektrische Leistung PB4 angeboten wird, die sich nachfolgend verringert.

Bis zum Zeitpunkt t12 werden die Batterien 24 der Fahrzeuge 20A und 20B mit relativ jeweils relativ großer maximaler erster Leistung PBA4 und PB4 aufgeladen, so dass insgesamt eine Leistung P5 bei der Ladeeinrichtung 40 abgerufen wird.

Zum Zeitpunkt t12, also beim Anschluss des Fahrzeuges 20C an die Ladeeinrichtung 40A, bietet die Ladeeinrichtung 20A auch dem Fahrzeug 20C eine Aufladung in einem ersten Ladezeitabschnitt TC4 mit einer maximalen ersten Leistung PC4 an.

Nun wäre es denkbar, dass in diesem Szenario die beiden Batterien 24 der Fahrzeuge 20A und 20B schon in einem solchen Maße aufgeladen sind, dass für die Fahrzeuge 20A und 20B wenig elektrische Leistung notwendig ist. Im Zuge einer sogenannten Nachverhandlung bietet jedoch die Ladeeinrichtung 40A auch den Fahrzeugen 20A und 20B bzw. deren Batterie-Ladesteuerungseinrichtungen 26 an, sich an die ersten Ladezeitabschnitt TA4 und TB4 anschließenden zweiten Ladezeitabschnitten TA5 und TB5, mit höheren elektrischen Leistungen aufzuladen, nämlich mit den Leistungen PA4 und PB5. Somit werden die Batterien 24 der Fahrzeuge 20A und 20B weiter mit vergleichsweise hoher elektrischer Leistung aufgeladen. Insbesondere ist es vorteilhaft, wenn ab dem Zeitpunkt t12 bis zum Zeitpunkt t13 die maximalen ersten elektrischen Leistungen PA5, PB5 und PC4 abgerufen bei der Ladeeinrichtung 40A abgerufen werden, so dass im Anschluss daran weitere Kapazität zum Aufladen von Batterien oder Fahrzeugen vorhanden ist.

Zum Zeitpunkt t13 bietet die Ladeeinrichtung 40A der Batterie-Ladesteuerungseinrichtung 26 des Fahrzeugs 20A jedoch nur noch eine maximale zweite oder dritte elektrische Leistung PA6 für einen Ladezeitabschnitt TA6 an, nämlich für eine Art Restaufladung. In dieser Phase können jedoch die Batterien 24 der Fahrzeuge 20B und 20C mit größeren elektrischen Leistungen PC5 und PB6 aufgeladen werden, nämlich in den Ladezeitabschnitten TB6 bzw. TC5. Zum Zeitpunkt t14 ist die Aufladung der Batterie 24 des Fahrzeuges 20A abgeschlossen. In dieser Phase, nämlich zwischen dem Zeitpunkt t14 bis zu einem Zeitpunkt t15 und somit einem Ladezeitabschnitt TC6 bzw. TB6 werden die Batterien 24 der Fahrzeuge 20B und 20C mit maximalen zweiten elektrischen Leistungen PB7 und PC6 aufgeladen. Man erkennt, dass ab dem Zeitpunkt t13, insbesondere ab dem Zeitpunkt t14 Ladekapazität der Ladeeinrichtung 40A zum Aufladen weiterer Batterien frei wird.

Die Ladeeinrichtung 40A verhandelt beispielsweise zum Zeitpunkt t12 mit der Batterie-Ladesteuerungseinrichtung 26 des Fahrzeuges 20A, dass nicht die an sich im zweiten Ladezeitabschnitt geringe Leistung PA6 abgerufen wird, sondern ein Ladeplan vorgeschlagen wird, bei dem für den Ladezeitabschnitt TA5, d.h. bis zum Zeitpunkt t13, eine höhere elektrische Leistung PA5 abgerufen wird. Dadurch wird die Batterie 24 des Fahrzeuges 20 schneller aufgeladen, so dass Ladekapazität der Ladeeinrichtung 40A für später aufzuladende Fahrzeuge frei wird.

Ähnlich handelt die Ladeeinrichtung 40A in Zusammenwirkung mit der Batterie-Ladesteuerungseinrichtung 26 des Fahrzeuges 20B zum Zeitpunkt t13, so dass dieses im Rahmen eines weiter angebotenen Ladeplans nicht nur die zweite elektrische Leistung PB7 abrufen kann, sondern eine dieser gegenüber höhere elektrische Leistung PB6.

Die stationäre Ladeeinrichtung 40 kann die Länge der Ladezeitabschnitte TA1, TA2 etc. sowie auch der abzugebenden Leistungen, beispielsweise der Leistungen PA1, PA2 etc. in Abhängigkeit von einem oder mehreren Vorgabewerten ermitteln. So sendet beispielsweise der Lademanager 12 des Systems 10 eine Nachricht 90 an die Ladeeinrichtung 40A, in der nebst einer Steuerungsinformation 91, beispielsweise einer Adressangabe, ein Auslastungsverlauf 92 enthalten ist, der die Auslastung des Netzes 14 bzw. Belastung des Netzes 14 durch Verbraucher repräsentiert. So kann beispielsweise in schwachen Auslastungszeiten die Ladeeinrichtung 40A dementsprechend hohe erste maximale elektrische Leistungen PA1, PB1 und PC1 zur Verfügung stellen.

Auch der typische Nutzungsverlauf, beispielsweise die Anzahl von an die Ladeeinrichtung 40A angeschlossenen Fahrzeugen bzw. Batterien, kann die Höhe der abzugebenden maximalen elektrischen Leistung und/oder die Länge der jeweiligen Ladezeitabschnitte beeinflussen. So kann die Ladeeinrichtung 40 beispielsweise in ihrem Speicher 48 einen oder mehrere Nutzungsverläufe 94 abspeichern, in der sie die Nutzung durch aufzuladende Batterien 24 bzw. Fahrzeuge 20 sozusagen protokolliert. Der Blick in die Vergangenheit, nämlich auf die Nutzungsverläufe 94 ermöglicht es der Ladeeinrichtung 40, beispielsweise für Zeiten, in denen sie typischerweise wenig genutzt wird, hohe maximale erste elektrische Leistungen und/oder lange erste Ladezeitabschnitte vorzusehen. Wenn jedoch der Nutzungsverlauf 94 für die Vergangenheit signalisiert, dass in einem Zeitraum eine Mehrzahl von Batterien mit hoher Leistung typischerweise durch die Ladeeinrichtung 40A aufzuladen sind, stellt sie bei einer aktuellen Anfrage oder Anforderung zur Aufladung einer Batterie, beispielsweise der Batterie 24 des Fahrzeugs 20C, nur eine relativ kleine erste elektrische Leistung PC1 zur Verfügung.

Auch die typischen tageszeitabhängigen Parameter, so z.B. dass abends und über Nacht viele Fahrzeuge aufzuladen sind, kann von der Ladeeinrichtung 40A berücksichtigt werden. In dem Speicher 48 ist beispielsweise ein Tagezeitwert 92 abgespeichert. So stellt die Ladeeinrichtung 40A beispielsweise in den Abendstunden, wenn typischerweise viele Fahrzeuge aufzuladen sind, nur relativ kurze erste Ladezeiträume TA1, TB1 und TC1 zur Verfügung. So können beispielsweise die Zeitabstände bzw. die Ladephasen und Ladezeitabschnitte TA1, TB1 und TC1 in den Morgenstunden zwischen 7.00 Uhr und 9.00 Uhr klein sein, insbesondere zehn Minuten oder kleiner, während anschließend tagsüber, wenn typischerweise weniger Fahrzeuge aufzuladen sind, längere Ladephasen bzw. Ladezeitabschnitte in den jeweiligen Ladeplänen bereitgestellt werden oder angeboten werden.

Das Grundprinzip bei einer erfindungsgemäßen Ladeeinrichtung lautet also, dass sie versucht in einem ersten Ladezeitabschnitt möglichst viel elektrische Leistung zum Aufladen elektrischer Verbraucher bzw. Batterien bereit zu stellen, so dass in nachfolgenden Zeitabschnitten eine geringe Verpflichtung besteht, elektrische Leistung zum Aufladen von bereits angeschlossenen Batterien bereit zu stellen und somit weiter oder später angeschlossene Batterien möglichst maximal aufgeladen werden können.

## Patentansprüche

1. Verfahren zum Aufladen einer Batterie (24), insbesondere einer Fahrzeugbatterie, mit elektrischem Strom an einer mindestens einen Ladeanschluss (41) für die Batterie (24) aufweisenden stationären Ladeeinrichtung (40), wobei die Ladeeinrichtung (40) und eine Batterie-Ladesteuerungseinrichtung (26), die bei der Batterie (24) angeordnet ist und mit der Batterie (24) ein System bildet, über eine Kommunikationsverbindung (46) miteinander verbunden sind, umfassend:
- Senden einer Anforderungsnachricht (60) mit einer elektrischen Ladebedarfsangabe (62) und einer Ladezeitangabe (63) durch die Batterie-Ladesteuerungseinrichtung (26) an die stationäre Ladeeinrichtung (40), wobei die Ladebedarfsangabe (62) einen zum Aufladen der Batterie (24) erforderlichen elektrischen Ladebedarf, insbesondere eine Anforderung-Energiemenge und/oder eine zum Aufladen der Batterie (24) benötigte elektrische Leistung, und die Ladezeitangabe (63) eine zum Aufladen der Batterie (24) zur Verfügung stehende Zeit angeben,
- Senden eines Ladeplans (72), insbesondere anhand einer Ladeplan-Nachricht (70X), durch die stationäre Ladeeinrichtung (40) an die Batterie-Ladesteuerungseinrichtung (26), wobei der Ladeplan (72) einen Verlauf maximal zum Aufladen der Batterie (24) bereitstellbarer elektrischer Leistung während eines innerhalb der Ladezeitangabe (63) liegenden Ladezeitraums enthält, **gekennzeichnet durch**:
- Ermitteln des Verlaufs der zum Aufladen der Batterie (24) bereitstellbaren elektrischen Leistung für den Ladeplan (72) derart, dass in einem ersten Ladezeitabschnitt (TA1) des Ladezeitraums eine erste maximale elektrische Leistung (PA1) und in mindestens einem dem ersten Ladezeitabschnitt (TA1) folgenden zweiten Ladezeitabschnitt (TA2) des Ladezeitraums eine zweite maximale elektrische Leistung (PA2) zum Aufladen der Batterie (24) bereitsteht, wobei die erste maximale elektrische Leistung (PA1) um einen Faktor größer als die zweite maximale elektrische Leistung (PA2) ist,
- Aufladen der Batterie (24) gemäß dem Ladeplan (72), insbesondere wenn die Batterie-Ladesteuerungseinrichtung (26) den Ladeplan (72) akzeptiert, und
- Anbieten mindestens eines zweiten Ladeplans (72B) durch die stationäre Ladeeinrichtung (40) nach zumindest teilweiser Nutzung des oder eines vorherigen Ladeplans (72), der einen ersten Ladeplan bildet, wobei in dem mindestens einen zweiten Ladeplan (72B) angebotene maximale elektrische Leistungen und/oder den Leistungen zugeordnete Ladezeitabschnitte von dem ersten Ladeplan (72) verschieden sind.

2. Verfahren nach Anspruch 1, **dadurch gekennzeichnet, dass** eine von der stationären Ladeeinrichtung (40) in dem Ladezeitraum durch den Ladeplan (72) angebotene Bereitstellung-Energiemenge größer oder gleich der Anforderung-Energiemenge ist.

3. Verfahren nach Anspruch 1 oder 2, **gekennzeichnet durch** Ermitteln der ersten maximalen elektrischen Leistung (PA1) derart, dass sie einer maximalen Anschlussleistung (Pmax) der Ladeeinrichtung (40) entspricht oder die maximale Anschlussleistung (Pmax) der Ladeeinrichtung (40) maximal ausnutzt und/oder eine maximale Anschlussleistung (Pmax) der Ladeeinrichtung (40) nicht überschreitet und/oder Senden einer Akzeptanznachricht (65) durch die Batterie-Ladesteuerungseinrichtung (26) an die stationäre Ladeeinrichtung (40), wobei mit der Akzeptanznachricht (65) der Ladeplan (72) für die stationäre Ladeeinrichtung (40) verbindlich ist oder wird.

4. Verfahren nach einem der vorhergehenden Ansprüche, **gekennzeichnet durch** simultanes Aufladen einer ersten Batterie (24) und mindestens einer zweiten Batterie (24) an der stationären Ladeeinrichtung (40) und/oder Ermitteln der ersten maximalen elektrischen Leistung (PA1) derart, dass in dem ersten Ladezeitabschnitt (TA1) mindestens eine zweite elektrische Batterie (24) durch die stationäre Ladeeinrichtung (40) aufladbar ist und/oder Aufladen mindestens einer zweiten elektrischen Batterie (24) durch die stationäre Ladeeinrichtung (40) während des mindestens einen zweiten Ladezeitabschnitts (TA2) der ersten elektrischen Batterie (24).

5. Verfahren nach einem der vorhergehenden Ansprüche, **gekennzeichnet durch** Ermitteln jeweils eines ersten Ladezeitraums (TA1, TB1) und einer ersten elektrischen Leistung (PA1, PB1) für die erste Batterie (24) und die oder eine mindestens zweite Batterie (24) sowie Ermitteln jeweils mindestens eines zweiten Ladezeitraums (TA2, TB2) und einer jeweiligen dem zweiten Ladezeitraum (TA2, TB2) zugeordneten zweiten maximalen elektrischen Leistung (PA2, PB2) für die erste Batterie (24) und die mindestens eine zweite Batterie (24), wobei die Batterien (24) in den ihnen zugeordneten Ladezeiträumen simultan aufladbar sind und die jeweiligen ersten maximalen elektrischen Leistungen (PA1, PB1) um denselben Faktor oder unterschiedliche Faktoren größer als die jeweiligen zweiten elektrischen Leistungen (PA2, PB2) sind.

6. Verfahren nach einem der vorhergehenden Ansprüche, **gekennzeichnet durch** Ermitteln der in einem jeweiligen Ladezeitraum für alle an die Ladeeinrichtung (40) angeschlossenen Batterien (24) insgesamt bereitzustellenden maximalen elektrischen Leistung derart, dass sie einer maximalen Anschlussleistung (Pmax) der Ladeeinrichtung (40) entspricht oder die maximale Anschlussleistung (Pmax) der Ladeeinrichtung (40) maximal ausnutzt und/oder eine maximale Anschlussleistung (Pmax) der Ladeeinrichtung (40) nicht überschreitet.

7. Verfahren nach einem der vorhergehenden Ansprüche, **gekennzeichnet durch** Anbieten mindestens einer gegenüber der zweiten maximalen Leistung (PA2) höheren dritten maximalen Leistung für einen sich an den ersten Ladezeitraum anschließenden dritten Ladezeitraum durch die stationäre Ladeeinrichtung (40) an die Batterie-Ladesteuerungseinrichtung (26), falls eine dafür erforderliche elektrische Leistung der stationären Ladeeinrichtung (40) in dem dritten Ladezeitraum zur Verfügung steht.

8. Verfahren nach einem der vorhergehenden Ansprüche, **gekennzeichnet durch** Anbieten einer Verlängerung des ersten Ladezeitabschnitts (TC1) durch die stationäre Ladeeinrichtung (40) und Aufladen der ersten Batterie (24) unter Nutzung der ersten maximalen elektrischen Leistung (PC1) oder einer gegenüber der zweiten maximalen elektrischen Leistung (PC2) höheren elektrischen Leistung während des verlängerten ersten Ladezeitabschnitts (TC1'), falls die Batterie-Ladesteuerungseinrichtung (26) das Verlängerungsangebot angenommen hat.

9. Verfahren nach einem der vorhergehenden Ansprüche, **gekennzeichnet durch** Ermitteln der ersten maximalen elektrischen Leistung (PA1) derart, dass die Batterie (24) und mindestens eine zweite Batterie (24) unter maximaler Ausnutzung der Anschlussleistung (Pmax) der stationären Ladeeinrichtung (40) an der stationären Ladeeinrichtung (40) aufgeladen werden.

10. Verfahren nach einem der vorhergehenden Ansprüche, **gekennzeichnet durch** Versenden mindestens einer Präferenzinformation (74), insbesondere einer Preisinformation, zu dem Ladeplan (72) durch die stationäre Ladeeinrichtung (40) an die Batterie-Ladesteuerungseinrichtung (26), wobei die Batterie-Ladesteuerungseinrichtung (26) durch die Präferenzinformation (74) zu einer maximalen Nutzung der ersten maximalen elektrischen Leistung (PA1) stimuliert wird.

11. Verfahren nach einem der vorhergehenden Ansprüche, **gekennzeichnet durch** Ermitteln des ersten Ladezeitabschnitts (TA1) und/oder des mindestens einen zweiten Ladezeitabschnitts (TA2) und oder der ersten maximalen elektrischen Leistung (PA1) und/oder der zweiten maximalen elektrischen Leistung (PA2) in Abhängigkeit mindestens einem Vorgabewert, insbesondere in Abhängigkeit von einem Tageszeitwerts (93) und/oder in Abhängigkeit von einem Auslastungsverlauf (92) eines die stationäre Ladeeinrichtung (40) mit elektrischer Energie versorgenden Netzes (14) und/oder in Abhängigkeit von einem Nutzungsverlauf (94) der stationären Ladeeinrichtung (40), wobei der Auslastungsverlauf (92) eine Auslastung des versorgenden Netzes durch Verbraucher repräsentiert und wobei der Nutzungsverlauf (94) eine Nutzung der stationären Ladeeinrichtung (40) in der Vergangenheit betrifft.

12. Verfahren nach einem der vorhergehenden Ansprüche, **dadurch gekennzeichnet, dass** der Faktor, um den die erste maximale elektrische Leistung (PA1) größer als die zweite maximale elektrische Leistung (PA2) ist, mindestens zwei, vorzugsweise mindestens drei, insbesondere mindestens vier oder fünf beträgt, und/oder der mindestens eine zweite Ladezeitabschnitt (TA2) mindestens doppelt so lang, vorzugsweise mindestens dreimal so lang, insbesondere mindestens viermal so lang oder fünfmal so lang, wie der erste Ladezeitabschnitt (TA1) ist und/oder dass die in dem ersten Ladezeitabschnitt (TA1) und dem mindestens einen zweiten Ladezeitabschnitt (TA2) jeweils bereitgestellte maximale elektrische Leistung mindestens zur Bereitstellung der durch die Ladebedarfsangabe (62) definierte Anforderung-Energiemenge ausreicht oder diese um einen Übererfüllungsfaktor, insbesondere um mindestens 20 %, übertrifft.

13. Computerprogrammprodukt für eine stationäre Ladeeinrichtung (40), die einen Prozessor aufweist, wobei das Computerprogrammprodukt durch den Prozessor ausführbaren Programmcode umfasst und die stationäre Ladeeinrichtung (40) und deren Prozessor bei Ausführung des Programmcodes die der stationären Ladeeinrichtung (40) zugeordneten Schritte des Verfahrens gemäß einem der vorhergehenden Ansprüche ausführt.

14. Stationäre Ladeeinrichtung (40) zur Durchführung des Verfahrens nach einem der Ansprüche 1 bis 12, wobei die Ladeeinrichtung (40) eine Kommunikationsschnittstelle zur Kommunikation mit der Batterie-Ladesteuerungseinrichtung (26) über die Kommunikationsverbindung (46) sowie Berechnungsmittel zum Ermitteln des mindestens einen Ladeplans (72) aufweist, wobei vorteilhaft vorgesehen ist, dass der mindestens eine Ladeanschluss (41) der stationären Ladeeinrichtung (40) einen ersten Ladeanschluss (41) und mindestens einen zweiten Ladeanschluss (41) umfasst, sodass an der Ladeeinrichtung (40) eine erste Batterie (24) und mindestens eine zweite Batterie (24) simultan aufladbar sind.

## Claims

1. Method for charging a battery (24), in particular a vehicle battery, with electric current at a stationary charging installation (40) having at least one charging connection (41) for the battery (24), wherein the charging installation (40) and a battery charging control device (26) located at the battery (24) and forming a system with the battery (24) are connected to each other via a communication link (46), the method comprising:
- the transmission of a request message with an electric charging requirement specification (62) and a charging time specification (63) by the battery charging control device (26) to the stationary charging installation (40), wherein the charging requirement specification (62) indicates a charging requirement needed for charging the battery (24), in particular a required energy quantity and/or an electric power required for charging the battery (24), and the charging time specification (63) indicates a time available for charging the battery (24),
- the transmission of a charging plan (72), in particular using a charging plan message (70X), by the stationary charging installation (40) to the battery charging control device (26), wherein the charging plan (72) contains a course of maximum electric power which can be made available for charging the battery (24) during a charging time within the charging time specification (63), **characterised by**
- the determination of the electric power which can be made available for charging the battery (24) in such a way that in a first charging time section (TA1) of the charging time a first maximum electric power (PA1) is available for charging the battery (24) and in at least one second charging time section (TA2) of the charging time following the first charging time section (TA1) a second maximum electric power (PA2) is available for charging the battery (24), wherein the first maximum electric power (PA1) is greater by a factor than the second maximum electric power (PA2),
- the charging of the battery (24) in accordance with the charging plan (72), in particular if the battery charging control device (26) accepts the charging plan (72), and
- the offering of at least one second charging plan (72B) by the stationary charging installation (40) following the at least partial use of the or a charging plan (72) forming the first the charging plan, wherein maximum electric powers offered in the at least one second charging plan (72B) and/or charging time sections assigned to the powers differ from the first charging plan (72).

2. Method according to claim 1, **characterised in that** an available energy quantity offered by the stationary charging installation (40) in the charging time by way of the charging plan (72) is greater than or equal to the required energy quantity.

3. Method according to claim 1 or 2, **characterised by** the determination of the first maximum electric power (PA1) in such a way that it corresponds to a maximum connected power (Pmax) of the charging installation (40) or utilises the maximum connected power (Pmax) of the charging installation (40) to its maximum extent and/or does not exceed a maximum connected power (Pmax) of the charging installation (40) and/or by the transmission of an acceptance message (65) by the battery charging control device (26) to the stationary charging installation (40), wherein the charging plan (72) is or becomes mandatory for the stationary charging installation (40) following the acceptance message (65).

4. Method according to any of the preceding claims, **characterised by** the simultaneous charging of a first battery (24) and at least one second battery (24) at the stationary charging installation (40) and/or the determination of the first maximum electric power (PA1) in such a way that in the first charging time section (TA1) at least one second electric battery (24) can be charged by the stationary charging installation (40), and/or the charging of at least one second electric battery (24) by the stationary charging installation (40) during the at least one second charging time section (TA2) of the first electric battery (24).

5. Method according to any of the preceding claims, **characterised by** the determination of a first charging time section (TA1, TB1) and a first electric power (PA1, PB1) each for the first battery (24) and the at least one second electric battery (24) and the determination of at least one second charging time section (TA2, TB2) each and a second maximum electric power (PA2, PB2) respectively assigned to the second charging time section (TA2, TB2) for the first battery (24) and the at least one second electric battery (24), wherein the batteries (24) can be charged simultaneously in their assigned charging times and the respective first maximum electric powers (PA1, PB1) are greater by the same factor or by different factors than the respective second electric powers (PA2, PB2).

6. Method according to any of the preceding claims, **characterised by** the determination of the maximum electric power to be made available in total for all batteries (24) connected to the charging installation (40) in a respective charging time in such a way that is corresponds to a maximum connected power (Pmax) of the charging installation (40) or utilises the maximum connected power (Pmax) of the charging installation (40) to its maximum extent and/or does not exceed a maximum connected power (Pmax) of the charging installation (40)

7. Method according to any of the preceding claims, **characterised by** the offer of at least one third maximum power greater than the second maximum power (PA2) for a third charging time following the first charging time by the stationary charging installation (40) to the battery charging control device (26) if an electric power of the stationary charging installation (40) required for this purpose is available in the third charging time.

8. Method according to any of the preceding claims, **characterised by** the offer of an extension of the first charging time section (TC1) by the stationary charging installation (40) and the charging of the first battery (24) while utilising the first maximum electric power (PC1) or an electric power which is greater than the second maximum electric power (PC2) during the extended first charging time section (TC1') if the battery charging control device (26) has accepted the extension offer.

9. Method according to any of the preceding claims, **characterised by** the determination of the first maximum electric power (PA1) in such a way that the battery (24) and at least one second battery (24) are charged at the stationary charging installation (40) with maximum utilisation of the connected power (Pmax) of the stationary charging installation (40).

10. Method according to any of the preceding claims, **characterised by** the sending of at least one preferential information (74), in particular a price information, relating to the charging plan (72) by the stationary charging installation (40) to the battery charging control device (26), wherein the battery charging control device (26) is stimulated by the preferential information (74) to a maximum utilisation of the first maximum electric power (PA1).

11. Method according to any of the preceding claims, **characterised by** the determination of the first charging time section (TA1) and/or the at least one second charging time section (TA2) and/or the first maximum electric power (PA1) and/or the second maximum electric power (PA2) as a function of at least one default value, in particular as a function of a time of day value (93), and/or as a function of a loading history (92) of a grid (14) supplying the stationary charging installation (40) with electric energy, and/or as a function of a utilisation history (94) of the stationary charging installation (40), wherein the loading history (92) represents a loading of the supply grid by users, and wherein the utilisation history (94) represents a utilisation of the stationary charging installation (40) in the past.

12. Method according to any of the preceding claims, **characterised in that** the factor by which the first maximum electric power (PA1) is greater than the second maximum electric power (PA2) is at least two, preferably at least three and in particular at least four or five, and/or **in that** the at least one second charging time section (TA2) is at least twice as long, preferably at least three times as long and in particular at least four times as long as the first charging time section (TA1), and/or **in that** the maximum electric power respectively made available in the first charging time section (TA1) and the at least one second charging time section (TA2) is at least sufficient to provide the required energy quantity defined by the charging requirement specification (62) or exceeds the latter by an overfill factor, in particular by at least 20%.

13. Computer programme product for a stationary charging installation (40) having a processor, wherein the computer programme product comprises programme code which can be executed by the processor and the stationary charging installation (40) and its processor perform the steps of the method according to any of the preceding claims which are assigned to the stationary charging installation (40) when executing the programme code.

14. Stationary charging installation (40) for performing the method according to any of claims 1 to 12, wherein the charging installation (40) has a communication interface for communicating with the battery charging control device (26) via the communication link (46) and calculating means for determining the at least one charging plan (72), wherein it is advantageously provided that the at least one charging connection (41) of the stationary charging installation (40) comprises a first charging connection (41) and at least one second charging connection (41), so that a first battery (24) and at least one second battery (24) can be charged simultaneously at the charging installation (40).

## Revendications

1. Procédé de chargement d'une batterie (24), en particulier d'une batterie de véhicule, avec un courant électrique au niveau d'un dispositif de chargement (40) stationnaire présentant au moins un raccord de chargement (41) pour la batterie (24), dans lequel le dispositif de chargement (40) et un dispositif de commande de chargement de batterie (26) qui est agencé près de la batterie (24) et forme avec la batterie (24) un système, sont reliés entre eux par le biais d'une liaison de communication (46), comprenant :
- l'envoi d'un message d'exigence (60) avec une indication de besoin de chargement (62) électrique et une indication de temps de chargement (63) par le dispositif de commande de chargement de batterie (26) au dispositif de chargement (40) stationnaire, dans lequel l'indication de besoin de chargement (62) indique un besoin de chargement électrique nécessaire au chargement de la batterie (24), en particulier une quantité d'énergie d'exigence et/ou une puissance électrique requise pour le chargement de la batterie (24), et l'indication de temps de chargement (63) indique un temps disponible pour le chargement de la batterie (24),
- l'envoi d'un plan de chargement (72), en particulier au moyen d'un message de plan de chargement (70X), par le dispositif de chargement (40) stationnaire au dispositif de commande de chargement de batterie (26), dans lequel le plan de chargement (72) contient une étendue de puissance électrique pouvant être mise à disposition au maximum pour le chargement de la batterie (24) pendant une période de chargement se trouvant dans l'indication de temps de chargement (63), **caractérisé par**
- la détermination de l'étendue de la puissance électrique pouvant être mise à disposition pour le chargement de la batterie (24) pour le plan de chargement (72) de telle manière que dans une première section de temps de chargement (TA1) de la période de chargement une première puissance électrique maximale (PA1) et dans au moins une seconde section de temps de chargement (TA2) suivant la première section de temps de chargement (TA1) de la période de chargement une deuxième puissance (PA2) électrique maximale pour le chargement de la batterie (24) soient disponibles, dans lequel la première puissance électrique maximale (PA1) est supérieure d'un facteur à la deuxième puissance électrique maximale (PA2),
- le chargement de la batterie (24) selon le plan de chargement (72), en particulier lorsque le dispositif de commande de chargement de batterie (26) accepte le plan de chargement (72), et
- l'offre au moins d'un second plan de chargement (72B) par le dispositif de chargement (40) stationnaire selon une utilisation au moins partielle du ou d'un plan de chargement (72) précédent qui forme un premier plan de chargement, dans lequel des puissances électriques maximales offertes dans l'au moins un second plan de chargement (72B) et/ou des sections de temps de chargement associées aux puissances sont différentes du premier plan de chargement (72).

2. Procédé selon la revendication 1, **caractérisé en ce qu'**une quantité d'énergie de mise à disposition offerte par le dispositif de chargement (40) stationnaire dans la période de chargement par le plan de chargement (72) est supérieure ou égale à la quantité d'énergie d'exigence.

3. Procédé selon la revendication 1 ou 2, **caractérisé par** la détermination de la première puissance électrique maximale (PA1) de telle manière qu'elle corresponde à une puissance de raccordement (Pmax) maximale du dispositif de chargement (40) ou exploite au maximum la puissance de raccordement (Pmax) maximale du dispositif de chargement (40) et/ou ne dépasse pas une puissance de raccordement (Pmax) maximale du dispositif de chargement (40) et/ou l'envoi d'un message d'acceptation (65) par le dispositif de commande de chargement de batterie (26) au dispositif de chargement (40) stationnaire, dans lequel avec le message d'acceptation (65) le plan de chargement (72) est ou sera obligatoire pour le dispositif de chargement (40) stationnaire.

4. Procédé selon l'une des revendications précédentes, **caractérisé par** le chargement simultané d'une première batterie (24) et d'au moins une seconde batterie (24) au niveau du dispositif de chargement (40) stationnaire et/ou la détermination de la première puissance électrique (PA1) maximale de telle manière que dans la première section de temps de chargement (TA1) au moins une seconde batterie électrique (24) soit rechargeable par le dispositif de chargement (40) stationnaire et/ou le chargement d'au moins une seconde batterie électrique (24) par le dispositif de chargement (40) stationnaire pendant l'au moins une seconde section de temps de chargement (TA2) de la première batterie électrique (24).

5. Procédé selon l'une des revendications précédentes, **caractérisé par** la détermination respectivement d'une première période de chargement (TA1, TB1) et d'une première puissance électrique (PA1, PB1) pour la première batterie (24) et la ou une au moins seconde batterie (24) ainsi que la détermination respectivement d'au moins une seconde période de chargement (TA2, TB2) et d'une deuxième puissance électrique (PA2, PB2) maximale respective associée à la seconde période de chargement (TA2, TB2) pour la première batterie (24) et l'au moins une seconde batterie (24), dans lequel les batteries (24) sont rechargeables simultanément dans les périodes de chargement qui leur sont associées et les premières puissances électriques (PA1, PB1) maximales respectives sont supérieures du même facteur ou de différents facteurs aux secondes puissances (PA2, PB2) électriques respectives.

6. Procédé selon l'une des revendications précédentes, **caractérisé par** la détermination de la puissance électrique maximale à mettre à disposition dans l'ensemble dans une période de chargement respective pour toutes les batteries (24) raccordées au dispositif de chargement (40) de telle manière qu'elle corresponde à une puissance de raccordement maximale (Pmax) du dispositif de chargement (40) ou exploite au maximum la puissance de raccordement (Pmax) maximale du dispositif de chargement (40) et/ou ne dépasse pas une puissance de raccordement (Pmax) maximale du dispositif de chargement (40).

7. Procédé selon l'une des revendications précédentes, **caractérisé par** l'offre d'au moins une troisième puissance maximale supérieure à la deuxième puissance (PA2) maximale pour une troisième période de chargement contigüe à la première période de chargement par le dispositif de chargement (40) stationnaire au dispositif de commande de chargement de batterie (26) dans le cas où une puissance électrique nécessaire à cet effet du dispositif de chargement (40) stationnaire est disponible dans la troisième période de chargement.

8. Procédé selon l'une des revendications précédentes, **caractérisé par** l'offre d'un prolongement de la première section de temps de chargement (TC1) par le dispositif de chargement (40) stationnaire et le chargement de la première batterie (24) en utilisant la première puissance électrique (PC1) maximale ou une puissance électrique supérieure par rapport à la deuxième puissance électrique (PC2) maximale pendant la première section de temps de charge (TC1') prolongée dans le cas où le dispositif de commande de chargement de batterie (26) a accepté l'offre de prolongement.

9. Procédé selon l'une des revendications précédentes, **caractérisé par** la détermination de la première puissance électrique (PA1) maximale de telle manière que la batterie (24) et au moins une seconde batterie (24) soient chargées en exploitant au maximum la puissance de raccordement (Pmax) du dispositif de chargement (40) stationnaire au niveau du dispositif de chargement (40) stationnaire.

10. Procédé selon l'une des revendications précédentes, **caractérisé par** l'émission d'au moins une information de préférence (74), en particulier une information sur les prix, par rapport au plan de chargement (72) par le dispositif de chargement (40) stationnaire au dispositif de commande de chargement de batterie (26), dans lequel le dispositif de commande de chargement de batterie (26) est stimulé par l'information de préférence (74) pour une utilisation maximale de la première puissance électrique (PA1) maximale.

11. Procédé selon l'une des revendications précédentes, **caractérisé par** la détermination de la première section de temps de chargement (TA1) et/ou d'au moins une seconde section de temps de chargement (TA2) et/ou de la première puissance électrique (PA1) maximale et/ou de la deuxième puissance électrique (PA2) maximale en fonction d'au moins une valeur de prescription, en particulier en fonction d'une valeur temporelle journalière (93) et/ou en fonction d'une étendue de taux de remplissage (92) d'un réseau (14) alimentant le dispositif de chargement (40) stationnaire en énergie électrique et/ou en fonction d'une étendue d'utilisation (94) du dispositif de chargement (40) stationnaire, dans lequel l'étendue de taux de remplissage (92) représente un taux de remplissage du réseau d'alimentation par des consommateurs et dans lequel l'étendue d'utilisation (94) concerne une utilisation du dispositif de chargement (40) stationnaire dans le passé.

12. Procédé selon l'une des revendications précédentes, **caractérisé en ce que** le facteur duquel la première puissance électrique (PA1) maximale est supérieure à la deuxième puissance électrique (PA2) maximale, est d'au moins deux, de préférence au moins trois, en particulier au moins quatre ou cinq, et/ou l'au moins une seconde section de temps de chargement (TA2) est au moins deux fois plus longue, de préférence au moins trois fois plus longue, en particulier au moins quatre fois plus longue ou cinq fois plus longue que la première section de temps de chargement (TA1) et/ou que la puissance électrique maximale mise à disposition respectivement dans la première section de temps de chargement (TA1) et l'au moins une seconde section de temps de chargement (TA2) suffise au moins pour la mise à disposition de la quantité d'énergie d'exigence définie par l'indication de besoin de chargement (62) ou dépasse celle-ci d'un facteur de remplissage excédentaire, en particulier d'au moins 20 %.

13. Produit de programme informatique pour un dispositif de chargement (40) stationnaire qui présente un processeur, dans lequel le produit de programme informatique comporte un code de programme réalisable par le processeur et le dispositif de chargement (40) stationnaire et son processeur réalisent lors de la réalisation du code de programme les étapes associées au dispositif de chargement (40) stationnaire du procédé selon l'une des revendications précédentes.

14. Dispositif de chargement (40) stationnaire pour la réalisation du procédé selon l'une des revendications 1 à 12, dans lequel le dispositif de chargement (40) présente une interface de communication pour la communication avec le dispositif de commande de chargement de batterie (26) par le biais de la liaison de communication (46) ainsi que des moyens de calcul pour la détermination d'au moins un plan de chargement (72), dans lequel il est prévu avantageusement que l'au moins un raccord de chargement (41) du dispositif de chargement (40) stationnaire comporte un premier raccord de chargement (41) et au moins un second raccord de chargement (41) de sorte qu'une première batterie (24) et au moins une seconde batterie (24) soient rechargeables simultanément au niveau du dispositif de chargement (40).
